(19) **Europäisches Patentamt**
**European Patent Office**
**Office européen des brevets**

(11) **EP 4 468 691 B1**

(12) **EUROPEAN PATENT SPECIFICATION**

(45) Date of publication and mention
of the grant of the patent:
**10.12.2025 Bulletin 2025/50**

(21) Application number: **24170443.6**

(22) Date of filing: **16.04.2024**

(51) International Patent Classification (IPC):
***H04N 1/00*** (2006.01)     ***H04N 1/60*** (2006.01)

(52) Cooperative Patent Classification (CPC):
**H04N 1/6033; H04N 1/00015; H04N 1/00045;**
**H04N 1/00724; H04N 1/6097**

(54) **PRINTING APPARATUS, PRINTING METHOD, PROGRAM, AND PRINTING MEDIUM**

DRUCKVORRICHTUNG, DRUCKVERFAHREN, PROGRAMM UND DRUCKMEDIUM

APPAREIL D'IMPRESSION, PROCÉDÉ D'IMPRESSION, PROGRAMME ET SUPPORT
D'IMPRESSION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **25.05.2023 JP 2023086250**

(43) Date of publication of application:
**27.11.2024 Bulletin 2024/48**

(73) Proprietor: **CANON KABUSHIKI KAISHA**
**Tokyo 146-8501 (JP)**

(72) Inventor: **YOSHIDA, Teruyuki**
**Tokyo (JP)**

(74) Representative: **WESER & Kollegen**
**Patentanwälte PartmbB**
**Radeckestraße 43**
**81245 München (DE)**

(56) References cited:
**JP-A- 2006 068 907     JP-A- 2021 185 397**
**US-A1- 2012 069 359**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

BACKGROUND

Field

The present disclosure relates to a technique for normally executing apparatus maintenance and the like in the case of using sheets of white paper, paper of a color other than white (hereinafter, color paper), and the like in a printing apparatus.

Description of the Related Art

Printing apparatuses have a function of adjusting color registration (hereinafter, color reg). The above function is a function of analyzing a scan image obtained by scanning a pattern printed on a sheet and adjusting a positional relation of a print head of each color based on an analysis result (hereinafter, a reg adjusting function). The above function is usually executed during a maintenance operation but not actual printing.

There is a problem that if the above function is executed in the case where a printing apparatus is printing on color paper other than white paper, a pattern cannot be determined in a scan image of the pattern printed on the color paper, and the above analysis cannot be properly conducted. In this regard, Japanese Patent Laid-Open No. 2021-133601 discloses a technique in which the user selects a printing mode with background to cause a white ink to be ejected to print a background of a pattern, and then the pattern is printed. JP 2021-185397 A also describes a method for printing colored QR codes and barcodes on color paper.

SUMMARY

The present disclosure provides a technique that can surely analyze a pattern printed on a sheet.

The present disclosure in its first aspect provides a printing apparatus as specified in claims 1 to 19. The present invention in its second aspect provides a printing method as specified in claim 20. The present disclosure in its third aspect provides a program as specified in claim 21. The present disclosure in its fourth aspect provides a storage medium as specified in claim 22.

Further features of the present disclosure will become apparent from the following description of exemplary embodiments with reference to the attached drawings.

BRIEF DESCRIPTION OF THE DRAWINGS

FIG. 1 is a diagram showing an example of a configuration of a system;

FIG. 2 is a diagram for explaining a configuration of a printing apparatus;
FIG. 3 is a diagram for explaining normal printing processing;
FIG. 4 is a flowchart showing a flow of maintenance processing;
FIGs. 5A to 5D are diagrams for explaining the maintenance processing;
FIG. 6 is a flowchart showing a flow of maintenance processing;
FIG. 7 is a flowchart showing a flow of dynamic maintenance processing;
FIGs. 8A to 8C are diagrams for explaining the dynamic maintenance processing;
FIG. 9 is a flowchart showing a flow of dynamic maintenance processing;
FIG. 10 is a flowchart showing a flow of dynamic maintenance processing;
FIGs. 11A to 11C are diagrams for explaining the dynamic maintenance processing;
FIG. 12 is a flowchart showing a flow of dynamic maintenance processing;
FIG. 13 is a flowchart showing a flow of dynamic maintenance processing; and
FIGs. 14A to 14C are diagrams for explaining the dynamic maintenance processing.

DESCRIPTION OF THE EMBODIMENTS

In the technique of Japanese Patent Laid-Open No. 2021-133601, since the printing of a background depends on the selection by the user, there are cases where a background is printed even though there is no need to print the background and where a background is not printed even though there is need to print the background. For example, in the case where the user does not select the printing of a background, although the sheet is color paper other than white paper, there is a possibility that a pattern cannot be determined in a scan image of the pattern printed on the color paper.

The above-described problem can occur not only in the case of a pattern for detecting color reg shift but also, for example, in the case where a pattern for detecting color unevenness, a pattern for detecting ejection defects, a pattern for adjusting color tone, or the like is printed on a sheet.

Hereinafter, modes for carrying out the present invention will be described by using the drawings. Note that the following embodiments are not intended to limit the invention according to Claims, and all combinations of features described in the embodiments are not necessarily essential in the solution of the invention. Note that the same configurations are described with the same reference signs. In addition, each step in flowcharts is represented with "S" attached in the front thereof.

[First Embodiment]

(System Configuration)

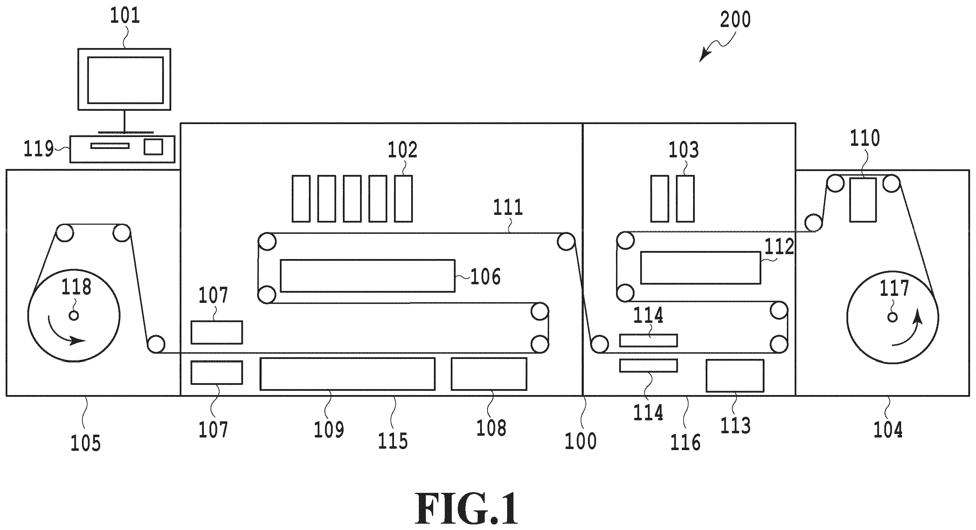

FIG. 1 is a diagram showing an example of a configuration of a system 200 according to the present embodiment. The printing apparatus 100 forms an image on continuous paper 111 which is a printing medium being used in the present embodiment and enabling continuous image formation (hereinafter referred to as roll paper). The printing apparatus 100 includes a feeding apparatus 104, an annex section 116, a main section 115, a discharge apparatus 105, a UI operation panel 101, and a control PC 119. The annex section 116 performs special color printing as pre-printing. In the special color printing, for example, a background having a predetermined pattern or the like is printed. The main section 115 performs basic color printing as additional printing. In the basic color printing, for example, a predetermined pattern or the like is printed. That is, it can also be said that the printing apparatus 100 is a digital printer that performs pre-printing and additional printing.

The feeding apparatus 104 is an apparatus which feeds the roll paper 111 to the printing apparatus 100. The feeding apparatus 104 rotates a paper tube of the roll paper 111 about a rotation shaft 117 to roll out the roll paper 111 wound around the paper tube and conveys the roll paper 111 toward the printing apparatus 100 via a plurality of rollers (a conveyance roller, a feeding roller, and the like) at a constant speed.

The discharge apparatus 105 is an apparatus which discharges the roll paper 111 from the printing apparatus 100. The discharge apparatus 105 is an apparatus which rotates the roll paper 111, conveyed from the printing apparatus 100, about a rotation shaft 118 at a constant speed via a plurality of rollers (for example, a conveyance roller and a discharge roller) and winds the roll paper 111 in the form of a roll as a product of the roll paper 111. In the discharge apparatus 105, the roll paper 111 is wound around a paper tube on the rotation shaft 118 and held in the form of a roll. Before the start of printing, the roll paper 111 is passed from the feeding apparatus 104 to the discharge apparatus 105 via predetermined positions in the above apparatuses. Specifically, the roll paper 111 is loaded in the feeding apparatus 104. The roll paper 111 loaded in the feeding apparatus 104 is passed above a meander correction apparatus 110 and below a first printing apparatus 103 of the annex section 116 in order.

The first printing apparatus 103 includes a print head of a special color (for example, a white ink or the like) other than CMYK, which are basic colors in printing, and prints the special color on the roll paper 111. The above print head prints characters, images, or the like on paper or the like. The above print head includes a large number of nozzles provided inside and prints an image by ejecting an ink from the nozzles onto a sheet. That is, the first printing apparatus 103 prints, for example, a background or the like of a predetermined pattern with white. The roll paper 111 is further passed below a drying apparatus 112, above a cooling apparatus 113, inside a connection scanner apparatus 114, and below a second printing apparatus 102 of the main section 115 in order.

The second printing apparatus 102 is provided downstream of the first printing apparatus 103, includes print heads of the respective printing basic colors (CMYK), and prints the printing basic colors (CMYK). The print head of each color prints characters, images, or the like on paper or the like. Each print head includes a large number of nozzles provided inside and prints an image by ejecting an ink from the nozzles onto a sheet. That is, the second printing apparatus 102 prints, for example, a predetermined pattern or the like. The roll paper 111 is further passed below a drying apparatus 106, above a cooling apparatus 108, above a cooling apparatus 109, and inside a connection scanner apparatus 107 in order. Next, the roll paper 111 is wound around the rotation shaft 118 of the discharge apparatus 105.

In the case of printing, after the roll paper 111 is passed into the system 200, a print job is inputted to the control PC 119 of the system 200. After the print job is inputted, printing is started by pressing down a printing start button on the UI operation panel 101.

(Printing Apparatus)

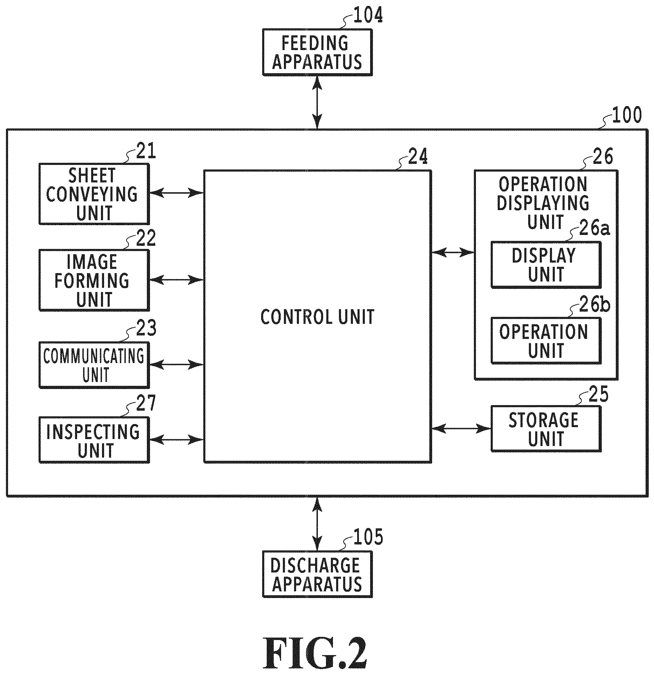

FIG. 2 is a diagram for explaining a configuration of the printing apparatus 100. The printing apparatus 100 includes a sheet conveying unit 21, an image forming unit (printing unit) 22, a communicating unit 23, a control unit 24, a storage unit 25, an operation displaying unit 26, and an inspecting unit 27. The sheet conveying unit 21 performs control to convey the roll paper 111 inside the printing apparatus 100. The sheet conveying unit 21 performs control to convey the roll paper 111, which has been conveyed from the feeding apparatus 104, to the image forming unit 22 by means of a plurality of rollers, for example. The sheet conveying unit 21 performs control to convey the roll paper 111, which has been passed through the image forming unit 22, to the discharge apparatus 105 by means of a plurality of rollers.

The image forming unit 22, based on received print data, controls the printing operations of the second printing apparatus 102 and the first printing apparatus 103. The communicating unit 23 is configured with a communication control card such as a LAN (Local Area Network) card, for example. The communicating unit 23 transmits and receives various data to and from an external apparatus (for example, the control PC 119) connected to a communication network such as LAN or WAN (Wide Area Network).

The control unit 24 is configured with a CPU (Central Processing Unit), a RAM (Random Access Memory), and the like, for example. The CPU of the control unit 24 reads various programs such as a system program and a processing program stored in the storage unit 25, extracts the programs in the RAM, and executes various processes in accordance with the extracted programs. For example, the control unit 24 is capable of performing image formation processing of executing an image formation job (hereinafter simply referred to as a job) in accordance with an instruction of the user.

The storage unit 25 is configured with a nonvolatile semiconductor memory (so-called a flash memory), a HDD (Hard Disk Drive), or the like, for example. In the storage unit 25, various programs such as the system program and the processing program to be executed by the control unit 24 and various data required for executing these programs are stored.

The operation displaying unit 26 is configured with a liquid crystal display (LCD) with a touch panel, for example, and includes a displaying unit 26a and an operation unit 26b. The displaying unit 26a displays various information on a display screen in the UI operation panel 101 in accordance with display control signals inputted from the control unit 24. The operation unit 26b receives various input operations by the user through various operation keys such as a numeric keypad and a start key displayed on the UI operation panel 101 and outputs operation signals to the control unit 24. The operation displaying unit 26 is used for setting job information and the like in the case of executing a job, for example. The operation displaying unit 26 allows the user to set conditions such as a sheet to be used as desired.

The inspecting unit 27 performs control to check the printing state of the printing apparatus. The inspection method may be any of various methods such as a method that prints and reads a pattern for inspection or a pattern for confirmation with a scanner, a method that directly reads a printed image with a camera or a scanner, and a method that monitors the ejection state from the nozzles.

An operation in the case of performing image formation processing on the roll paper 111 in the printing apparatus 100 will be described. First, the user creates background data and additional printing data for a job in an external apparatus, performs print setting of the job, and transmits these pieces of information to the printing apparatus 100 via the communication network. The control unit 24 of the printing apparatus 100 receives data of the job and print setting information of the job transmitted from the external apparatus via the communicating unit 23. The control unit 24 starts, based on the information thus received, a printing operation. That is, conveyance of the roll paper 111 is started via the sheet conveying unit 21 and the control unit 24 and the second printing apparatus 102 and the first printing apparatus 103 are caused to perform the printing operation based on the print data. In addition, the inspecting unit 27 checks whether the printing has been made on the roll paper 111 without displacement of the color reg. That is, the inspecting unit 27 prints, on the roll paper, a pattern which is a pattern represented by pattern data received via the communicating unit for detecting color misregistration which would occur in an image formed by the image forming unit 22. The inspecting unit 27 checks whether there is misregistration in the color reg by analyzing a scan image of the pattern, which is obtained by reading the printed pattern with the connection scanner apparatus 107. Besides, the inspecting unit 27 is capable of checking the following items. Specifically, the inspecting unit 27 is capable of checking whether there is an ejection defect by using a pattern for detecting an ejection defect of the print head. The inspecting unit 27 is capable of checking whether there is color unevenness by using a pattern for detecting color unevenness. The inspecting unit 27 is capable of checking color tone by using a pattern for detecting color tone. Besides the above-mentioned items, the inspecting unit 27 is capable of checking other inspection items by using patterns corresponding to the inspection items. In the present embodiment, inspection of color reg will be described.

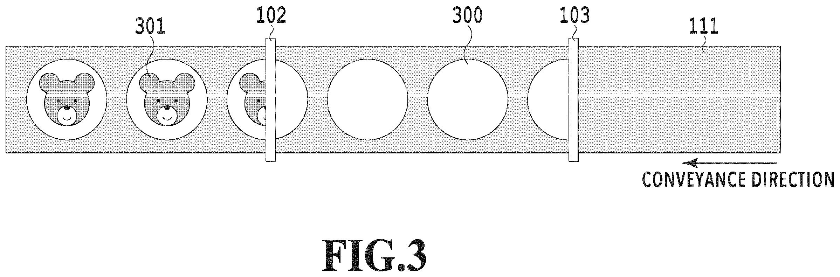

FIG. 3 is a diagram showing an example of image formation. FIG. 3 shows a concept of normal printing. The roll paper 111 is continuously conveyed in the conveyance direction in FIG. 3 and a background 300 is printed on the roll paper 111 thus conveyed in the first printing apparatus 103 of the annex section 116. Then, after the background 300 is fixed in the drying apparatus 112 and the cooling apparatus 113, additional printing is performed in the second printing apparatus 102 of the main section 115 to print an image 301 on the background 300. Thereafter, the image 301 is fixed on the roll paper by draining off water contained in the ink in the drying apparatus 106 and cooling the roll paper thus dried in the cooling apparatuses 108 and 109. Although the above background 300 is assumed here to be formed by using a white ink, the background 300 may be formed by using an ink of another ink color. However, the ink color of another ink only has to be an ink color whose difference in color from the ink color of the ink used in the second printing apparatus 102 of the main section 115 is larger than a predetermined threshold.

Note that although an inkjet-type printing apparatus is described as an example in the present disclosure, the method for forming an image is not limited to an inkjet method, and the present disclosure can be applied to a printing apparatus of an electrophotographic method, for example.

The details of a maintenance operation using a specific pattern (pattern image), which can be executed in the system of the present embodiment described by using FIGs. 1 to 3 will be described by using Examples.

(Example 1)

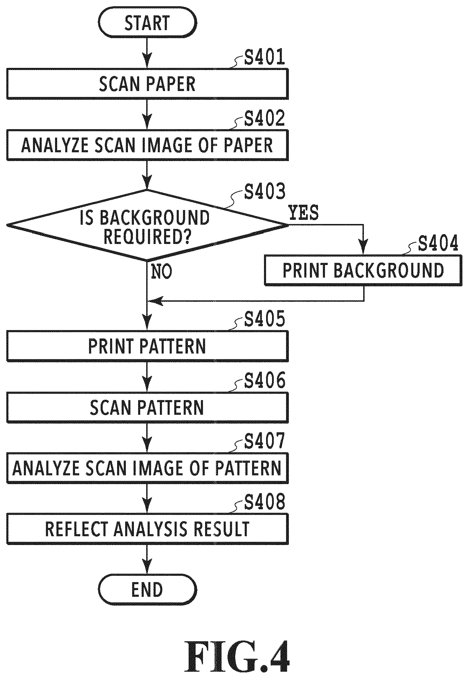

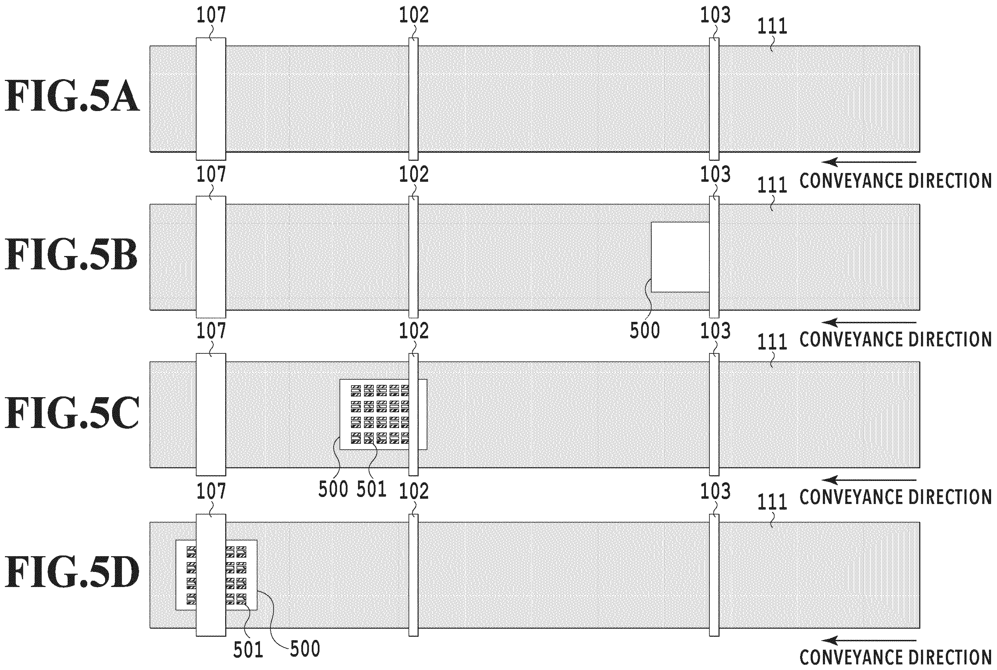

In the present Example, the case where color information indicating the color of roll paper (sheet) such as paper is obtained as surface information, and it is automatically determined based on the obtained surface information whether or not a background for recognizing a pattern for maintenance is required will be described by using the drawings. FIG. 4 is a flowchart showing a flow of the maintenance processing according to the present Example. The series of processing shown in FIG. 4 is performed by the CPU of the control unit 24 of the printing apparatus 100 reading program codes stored in the storage unit 25, extracting the program codes in the RAM, and executing the program codes. Alternatively, part or all of the functions of steps in FIG. 4 may be achieved by hardware such as an ASIC or an electronic circuit. Note that sign "S" in the description of each processing means to be a step in the flowchart. FIGs. 5A to 5D are diagrams for explaining the maintenance processing according to the present Example. FIG. 5A shows a state at the time of starting the maintenance processing, FIG. 5B shows a state at the time of printing a background, FIG. 5C shows a state at the time of printing a pattern on the background, and FIG. 5D shows a state at the time of scanning the pattern. Note that in the above system, once printing processing is started, the processing shown in FIG. 4 is started.

In S401, based on an instruction from the control unit 24, the connection scanner apparatus 107 obtains color information indicating the color of the surface of the roll paper as surface information of the roll paper from a scan image of the roll paper which is obtained by scanning the roll paper before an image is formed. That is, as shown in FIG. 5A, the connection scanner apparatus 107 obtains the surface information of the roll paper 111 from the scan image of the roll paper 111 which is obtained by scanning the roll paper 111. The above roll paper is, for example, white paper, color paper of a color other than white, a color film, a transparent film, or the like. Note that the surface information of the roll paper 111 (the color information of the roll paper 111) thus obtained is sent to the control unit 24.

In S402, based on an instruction from the control unit 24, the inspecting unit 27 analyzes whether the roll paper for printing is a roll paper that requires printing of a background for recognizing a color reg analysis pattern. That is, the inspecting unit 27 analyzes whether the roll paper for printing is a roll paper that requires printing of a background by using the surface information obtained in S401, color information of the plurality of ink colors used by the second printing apparatus 102 of the main section 115, and a predetermined threshold. From the above analysis, the inspecting unit 27 obtains background information indicating whether or not the roll paper for printing is a roll paper that requires printing of a background as an analysis result.

In the above analyzing method, it is determined whether a color difference calculated from the plurality of ink colors used by the second printing apparatus 102 of the main section 115 and a color indicated by the surface information of the roll paper obtained from the scan image of the roll paper is smaller than a predetermined threshold. The color difference is calculated by using a difference of the Euclidean distance given below in the L*a*b* color space from a color value measured by scanning the roll paper and a color value of each ink color used in the main section 115.

$$\left(\sqrt{\Delta L^{*2} + \Delta a^{*2} + \Delta b^{*2}}\right)$$

The color value of each ink color used in the main section 115 is assumed to be registered in the storage unit 25 in the apparatus in advance. In the case where the Euclidean distance between each ink color and the color of the roll paper is less than or equal to a predetermined threshold registered in the apparatus, the color difference is determined to be small. In the case where the color difference is less than or equal to the predetermined threshold and the color difference is determined to be small, since the shape of the pattern cannot be recognized in scan data (a scan image of the pattern) which is obtained by scanning the printed pattern, background information indicating that printing of a background is required is obtained as the analysis result. In the case where the color difference is larger than the predetermined threshold and the color difference is determined to be large, since the shape of the pattern can be recognized in scan data (the scan image of the pattern) which is obtained by scanning the printed pattern, background information indicating that printing of a background is not required is obtained as the analysis result.

(Analysis on Whether Background is Required)

The analysis on whether a background is required will be described by using a numerical example. It is assumed that the above system holds color values of inks shown below in advance.

Specifically, the system holds Lab (91, -48, -14) which is an L*a*b* value obtained by converting RGB (0, 255, 255), which is an RGB value, as a color value of cyan. The system holds Lab (60, 98, -61), which is an L*a*b* value obtained by converting RGB (255, 0, 255), which is an RGB value, as a color value of magenta. The system holds Lab (97, -22, 94), which is an L*a*b* value obtained by converting RGB (255, 255, 0), which is an RGB value, as a color value of yellow. The system holds Lab (0, 0, 0), which is an L*a*b* value obtained by converting RGB (255, 255, 255), which is an RGB value, as a color value of black RGB.

It is assumed that the color value of the roll paper indicated by scan data (the scan image of the roll paper) which is obtained by scanning the roll paper is Lab (76, -41, -12), which is an L*a*b* value obtained by converting RGB (13, 207, 207), which is an RGB value of the roll paper.

Here, the above Euclidean distance for each of cyan, magenta, yellow, and black is calculated as a color difference from the roll paper as follows.

The Euclidean distance from cyan is $\sqrt{((91-76)^2+(-48-(-41))^2+(-14-(-12))^2)}$=16.67. The Euclidean distance from magenta is $\sqrt{((60-76)^2+(98-(-41))}$

^2+(-61-(-12))^2)=148.24.

The Euclidean distance from yellow is √((97-76)^2+(-22-(-41))^2+(94-(-12))^2)=109.71. The Euclidean distance from black is √((0-76)^2+(0-(-41))^2+(0-(-12))^2)=87.18.

In the case where the above predetermined threshold for the color difference is assumed to be 30, since the above Euclidean distance from cyan, which is "16.67", is less than or equal to the above predetermined threshold, an analysis result that a background is required is obtained. Since the above Euclidean distance from magenta, which is "148.24", is larger than the above predetermined threshold, an analysis result that a background is not required is obtained. Since the above Euclidean distance from yellow, which is "109.71", is larger than the above predetermined threshold, an analysis result that a background is not required is obtained. Since the above Euclidean distance from black, which is "87.18", is larger than the above predetermined threshold, an analysis result that a background is not required is obtained. That is, an analysis result that a background for recognizing a pattern is required is obtained for the above roll paper.

In S403, the control unit 24 determines whether or not the roll paper for printing is a printing medium that requires printing of a background based on the analysis result obtained in S402. In a case where a determination result that the color difference between the roll paper and the ink color is small and a background is required as the above analysis result is obtained (YES in S403), the processing proceeds to S404. On the other hand, in a case where a determination result that the color difference between the roll paper and the ink color is large and a background is not required is obtained (NO in S403), the processing proceeds to S405.

In S404, based on an instruction from the control unit 24, the first printing apparatus 103 of the annex section 116 performs pre-printing of a background to form a background 500 with a predetermined size at a predetermined position on the surface of the roll paper as shown in FIG. 5B. The background 500 is formed at a center in a width direction of the roll paper 111. The background 500 is formed in a larger range than a color reg analysis pattern 501. Then, the roll paper on which the background 500 has been formed is dried by the drying apparatus 112 and cooled by the cooling apparatus 113. The background 500 is fixed on the roll paper by the above drying and cooling.

In S405, based on an instruction from the control unit 24, the second printing apparatus 102 of the main section 115 performs additional printing of the color reg analysis pattern 501 to form the color reg analysis pattern 501 on the background 500 as shown in FIG. 5C.

In S406, based on an instruction from the control unit 24, the inspecting unit 27 obtains a scan image of the color reg analysis pattern 501 which is obtained by scanning the color reg analysis pattern 501 by means of the connection scanner apparatus 107 as shown in FIG.

5D. In S407, the inspecting unit 27 analyzes whether or not there is displacement of the color reg and the amount of displacement based on the scan image (scan data) of the color reg analysis pattern 501 obtained in S406. An analysis result is obtained by the above analysis.

In S408, the control unit 24 transmits the analysis result obtained in S407 to the image forming unit 22. Then, the image forming unit 22 corrects, based on the analysis result thus received, the displacement of the color reg. That is, the analysis result is reflected to adjust the positions of the print heads of the respective colors as appropriate. Note that once the processing of S408 ends, the flow shown in FIG. 4 is completed.

As described above, the present Example makes it possible to surely analyze a pattern printed on a sheet even in the case where the sheet is of a color other than white. Hence, maintenance of a print using a color ink on a transparent, colored, or metallic sheet or the like which is of a color other than white can be conducted as appropriate.

(Modification of Example 1)

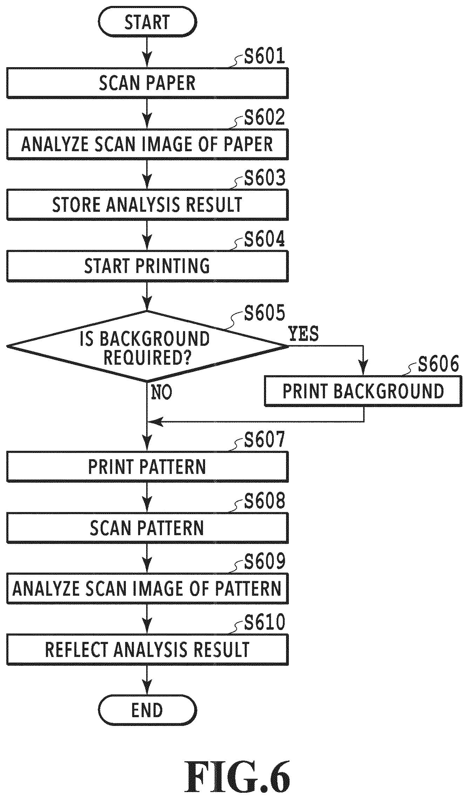

In the present modification, the case of analyzing whether or not a background for recognizing a pattern image is required before start of printing will be described by using the drawings. FIG. 6 is a flowchart showing a flow of maintenance processing according to the present modification. The series of processing shown in FIG. 6 is performed by the CPU of the control unit 24 of the printing apparatus 100 reading program codes stored in the storage unit 25, extracting the program codes in the RAM, and executing the program codes. Alternatively, part or all of the functions of steps in FIG. 6 may be achieved by hardware such as an ASIC or an electronic circuit. S602 is the same as the above S402, and S606 to S610 are the same as the above S404 to S408, so detailed description thereof will be omitted. Note that in a state where a roll paper is loaded (set) at a predetermined position in the printing apparatus, in a case where the roll paper loaded in the printing apparatus is selected by the user on the operation displaying unit 26, the processing shown in FIG. 6 is started.

In S601, the control unit 24 detects that a roll paper is loaded at the predetermined position based on a selecting operation by the user operating the operation displaying unit 26. Based on a result of the above detection, the connection scanner apparatus 107 obtains a scan image of the roll paper obtained by reading the roll paper before formation of an image as surface information of the above roll paper.

In S603, the control unit 24 receives the above background information obtained by the inspecting unit 27 in the above S602 and stores the background information in the storage unit 25. In S604, printing processing by the above system is started.

In S605, the control unit 24 determines whether or not a background is required in accordance with an analysis result indicated by the above background information which the control unit 24 stored in the storage unit 25 in S603. Note that in a case where a determination result that a background is required is obtained (YES in S605), the processing proceeds to S606. On the other hand, in a case where a determination result that a background is not required is obtained (NO in S605), the processing proceeds to S607.

As described above, the present modification makes it possible to surely analyze a pattern printed on a sheet even in the case where the sheet is of a color other than white. By obtaining an analysis result by analysis in advance before start of printing, it is possible to determine whether or not a background is required by using the above analysis result immediately after the start of printing.

In the above description, the case of determining whether a roll paper has been loaded from the content of operation by the user operating the operation displaying unit 26 has been described; however, the processing is not limited to this. For example, it is possible to install a dedicated sensor and to detect that a roll paper has been loaded by using the above dedicated sensor. In addition, it is possible to receive an input by the user operation to designate whether or not a roll paper requires a background for each type of roll paper, and to determine whether or not a background is required based on the input thus received. The storage unit 25 may store the above background information for each type of roll paper.

In addition, in the above description, the case of using the Euclidean distance of the L*a*b* color space in calculation of a color difference has been described; however, the processing is not limited to this. For example, a Euclidean distance of another color space such as the RGB color space may be used.

(Example 2)

In the present Example, the case of automatically determining whether or not there is a background and changing the size of the background at the time of dynamic maintenance will be described by using the drawings. The dynamic maintenance is a function of analyzing a scan image which is obtained by scanning a pattern printed on a margin region of a sheet and performing feedback for adjusting a positional relation of the print head of each color corresponding to the pattern while the user is performing actual printing. In the dynamic maintenance, it is possible to automatically correct color reg without stopping printing even in the case where displacement of the color reg has occurred during printing of a document with a large number of pages or a job with a large number of copies.

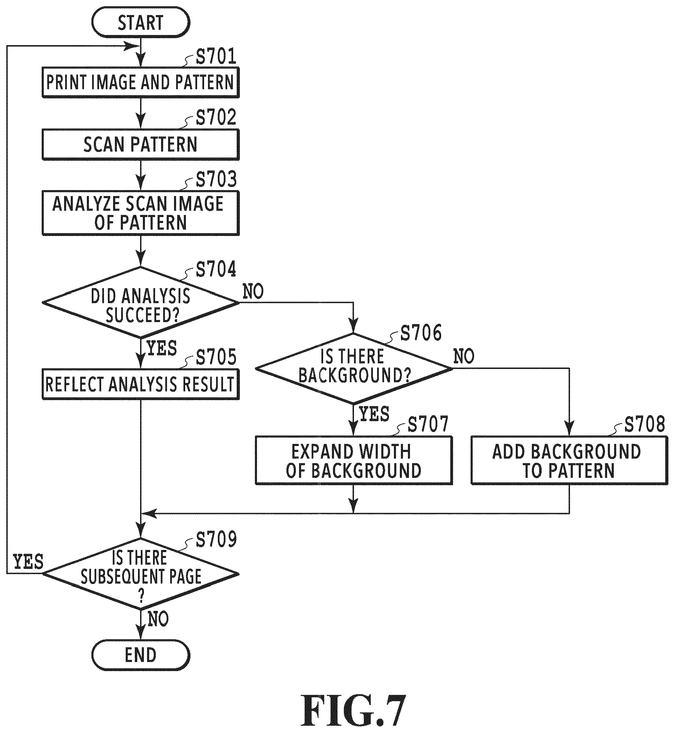

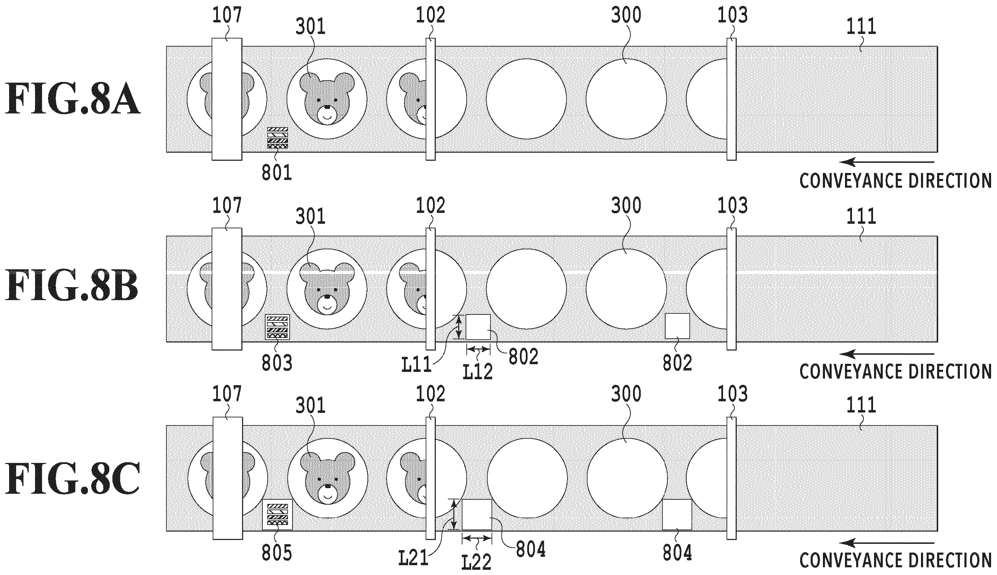

FIG. 7 is a flowchart showing a flow of the dynamic maintenance processing according to the present Example. The series of processing shown in FIG. 7 is performed by the CPU of the control unit 24 of the printing apparatus 100 reading program codes stored in the storage unit 25, extracting the program codes in the RAM, and executing the program codes. Alternatively, part or all of the functions of steps in FIG. 7 may be achieved by hardware such as an ASIC or an electronic circuit. FIGs. 8A to 8C are diagrams for explaining the dynamic maintenance processing according to the present Example. FIG. 8A shows a state at the time of printing a pattern with no background and an image, FIG. 8B shows a state at the time of printing a pattern with a background and the image, and FIG. 8C shows a state at the time of printing a pattern with a background having an expanded printing width and the image. Note that in the above system, once printing processing is started, the processing shown in FIG. 7 is started.

In S701, based on an instruction from the control unit 24, the image forming unit 22 prints an image and a color reg analysis pattern on a roll paper 111 as shown in FIG. 8A. A background 300 and an image 301 are formed based on images designated by the user. A color reg analysis pattern 801 is initially formed based on a color reg analysis pattern in a state with no background. In the case where an image with a background is designated, the first printing apparatus 103 of the annex section 116 performs pre-printing on the roll paper 111. Then, the roll paper on which the pre-printing has been performed is dried by the drying apparatus 112 and cooled by the cooling apparatus 113. The background 300 is fixed on the roll paper 111 by the above drying and cooling. Thereafter, the second printing apparatus 102 of the main section 115 performs additional printing on the roll paper on which the pre-printing has been performed. In the additional printing, the image 301 and the color reg analysis pattern 801 are printed. Then, the roll paper 111 on which the additional printing has been performed is dried by the drying apparatus 106 and cooled by the cooling apparatuses 108 and 109. The image 301 and the color reg analysis pattern 801 are fixed on the roll paper 111 by the above drying and cooling.

In S702, based on an instruction from the control unit 24, the connection scanner apparatus 107 obtains a scan image of the color reg analysis pattern 801 obtained by reading the color reg analysis pattern 801 fixed on the roll paper. In S703, based on an instruction from the control unit 24, the inspecting unit 27 analyzes whether or not there is displacement of the color reg and the amount of displacement based on the scan image of the color reg analysis pattern 801 obtained in S702. Specifically, inks of a plurality of colors are printed to be adjacent to one another, and whether or not there is displacement is determined from the positional relation of the patterns and the amount of displacement is calculated. For example, in the case where patterns of cyan and magenta are not adjacent to each other and there is a white region (a region on which no ink has been ejected) in between, it is determined that there is displacement. A measurement result obtained by measuring the distance of the white region between the patterns of cyan and magenta is obtained as the amount of displacement. In another example, in the case where patterns of magenta and yellow overlap each other as well, it is determined that there is displacement. In this case, by performing printing in which the positional relation between the patterns of magenta and yellow is reversed, the patterns are not made adjacent to each other and a white region is generated between the pattern of magenta and the pattern of yellow. A measurement result obtained by measuring the distance of this white region is obtained as the amount of displacement. An analysis result is obtained by the above analysis.

In S704, the control unit 24 receives the analysis result obtained by the inspecting unit 27 through the analysis in S703 and determines whether or not the above analysis succeeded based on the analysis result thus received. This is determined in accordance with whether or not the shape of the printed color reg analysis pattern 801 can be recognized on scan data. Binarization processing is performed on a scan image which is obtained by scanning a location where the pattern should be present in the roll paper such that the roll paper region and the location where the pattern has been printed can be seen. From a binarized image obtained by the binarization processing, the starting point of the pattern is searched for. At a portion becoming the starting point of the pattern, a starting point figure such as, for example, an open rectangle which allows the position of the starting point of the pattern to be easily recognized is printed. In the case where the above starting point figure cannot be found in the above binary image, it is determined that the above analysis failed. For example, in the case where a pattern of cyan is printed on a paper having a color close to cyan, since there is hardly a difference between the ink color and the color of the paper, the entire surface turns into completely black (or completely white) after the binarization processing. In the case where the entire surface of the above binary image is completely black or completely white, a region where the starting point figure has been printed cannot be found, so that it is determined that the above analysis failed. In a case where the shape of the color reg analysis pattern 801 can be recognized and a determination result that the above analysis succeeded is obtained (YES in S704), the processing proceeds to S705. On the other hand, in a case where a color difference between the color of the roll paper and the ink color used in printing the color reg analysis pattern is small, so that the shape of the color reg analysis pattern 801 cannot be recognized and a determination result that the above analysis failed is obtained (NO in S704), the processing proceeds to S706.

In S705, the control unit 24 transmits the analysis result to the image forming unit 22 and the image forming unit 22 corrects the displacement of the color reg. That is, the analysis result is reflected, so that the position of the print head of each color is appropriately adjusted. After the processing of S705 ends, the processing proceeds to S709.

In S706, the control unit 24 checks whether or not a background has been printed on the roll paper 111. That is, the control unit 24 determines whether or not a color reg analysis pattern with a background has been currently printed. This is determined by storing information indicating whether or not a background has been printed in the storage unit 25 and referring to the stored information. In a case where a check result that a background has not been printed is obtained (NO in S706), the processing proceeds to S708. On the other hand, in a case where a check result that a background has been printed is obtained (YES in S706), the processing proceeds to S707.

In S707, for a background for a color reg analysis pattern, the control unit 24 instructs the image forming unit 22 to expand the printing width of the background in a subsequent page. The printing width of the background is expanded to a predetermined size. For example, the printing width of the background may be expanded to a size 1.1 times the size of the background before the expansion. With this, in the case where there is a subsequent page of the roll paper, in S701, a relatively expanded background is printed on the subsequent page of the roll paper, and a pattern is printed on the relatively expanded background thus printed.

In S708, the control unit 24 instructs the image forming unit 22 to add a background to a color reg analysis pattern in the subsequent page. The above instruction is, for example, such an instruction that adds a background having a minimum width to a subsequent color reg analysis pattern. With this, in the case where there is a subsequent page of the roll paper, in S701, a background having a minimum width is printed on the subsequent page of the roll paper, and a pattern is printed on the background thus printed.

In S709, the control unit 24 checks whether or not there is a page subsequent to the page on which an image is currently being printed. In a case where a check result that there is no subsequent page is obtained (NO in S709), the flow shown in FIG. 7 is ended. On the other hand, in a case where a check result that there is a subsequent page is obtained (YES in S709), the processing is returned to S701.

(Processing From S701 To S709 In Second Round)

Processing from S701 to S709 in the second round will be described. Parts different from the processing from S701 to S709 in the first round will be mainly described.

In S701 in the second round, based on an instruction from the control unit 24, the image forming unit 22 prints an image of a subsequent page and prints a color reg analysis pattern which is different from that in S701 in the first round. An image 301 is formed based on an image designated by the user in the same manner as in S701 in the first round. Since the pattern is changed to a pattern with a background as the color reg analysis pattern which is different from that in S701 in the first round, the first printing apparatus 103 of the annex section 116 performs pre-printing to form a background given below. That is, a background 300 having a predetermined size is formed at a predetermined position and a background 802 having a predetermined size (L11×L12) is formed at a predetermined position. The above predetermined size for the background 802 is, for example, assumed to be a size which is larger than the size of a region where the color reg analysis pattern is formed but is such that the size of a region other than the region where the color reg analysis pattern is formed in the region where the background is formed is relatively small. Then, the roll paper on which the background 300 and the background 802 have been formed is dried by the drying apparatus 112 and cooled by the cooling apparatus 113. The background 300 and the background 802 are fixed on the roll paper by the above drying and cooling. Thereafter, the second printing apparatus 102 of the main section 115 performs additional printing on the roll paper on which the background 300 and the background 802 have been formed. In the additional printing, the image 301 and a color reg analysis pattern 803 are printed. Then, the roll paper on which the additional printing of the image 301 and the color reg analysis pattern 803 has been performed is dried by the drying apparatus 106 and cooled by the cooling apparatuses 108 and 109. The image 301 and the color reg analysis pattern 803 are fixed on the roll paper 111 by the above drying and cooling as shown in FIG. 8B.

In S702 in the second round, based on an instruction from the control unit 24, the connection scanner apparatus 107 obtains a scan image of the color reg analysis pattern 803 obtained by reading the color reg analysis pattern 803 fixed on the roll paper. In S703, based on an instruction from the control unit 24, the inspecting unit 27 analyzes whether or not there is displacement of the color reg and the amount of displacement based on the scan image of the color reg analysis pattern 803 obtained in S702. An analysis result is obtained by the above analysis. In S704, the control unit 24 receives the analysis result obtained by the inspecting unit 27 through the analysis in S703 and determines whether or not the above analysis succeeded based on the analysis result thus received. In a case where a determination result that the above analysis failed is obtained (NO in S704), the processing proceeds to S706. In S706, the control unit 24 checks whether or not a background has been printed on the roll paper. In a case where a check result that the background has been printed is obtained (YES in S706), the processing proceeds to S707. In S707, the control unit 24 instructs the image forming unit 22 to expand the printing width of the background for a color reg analysis pattern in a subsequent page. In S709, the control unit 24 checks whether or not there is a page subsequent to the page on which an image is currently being printed. In a case where a check result that there is no subsequent page is obtained (NO in S709), the flow shown in FIG. 7 is ended. In a case where a check result that there is a subsequent page is obtained (YES in S709), the processing is returned to S701.

(Processing From S701 To S709 In Third Round)

Processing from S701 to S709 in the third round will be described. Parts different from the processing from S701 to S709 in the first round and the second round will be mainly described.

In S701 in the third round, based on an instruction from the control unit 24, the image forming unit 22 prints an image of a subsequent page and prints a color reg analysis pattern which is different from those in S701 in the first round and the second round. A background 300 and an image 301 are formed based on images designated by the user in the same manner as in S701 in the first round and the second round. As the color reg analysis pattern different from those in S701 in the first round and the second round, the first printing apparatus 103 of the annex section 116 performs pre-printing to form a background 804 having a predetermined size (L21×L22) at a predetermined position. The predetermined size (L21×L22) for the background 804 is assumed to be larger than the predetermined size (L11×L12) for the background 802. Then, the roll paper on which the background 300 and the background 804 have been formed is dried by the drying apparatus 112 and cooled by the cooling apparatus 113. The background 300 and the background 804 are fixed on the roll paper by the above drying and cooling. That is, the background 804 is a background larger in area than the background 802. Thereafter, the second printing apparatus 102 of the main section 115 performs additional printing on the roll paper on which the background 300 and the background 804 have been formed. In the additional printing, the image 301 and a color reg analysis pattern 805 are printed. Then, the roll paper on which the additional printing of the image 301 and the color reg analysis pattern 805 has been performed is dried by the drying apparatus 106 and cooled by the cooling apparatuses 108 and 109. The image 301 and the color reg analysis pattern 805 are fixed on the roll paper by the above drying and cooling as shown in FIG. 8C. Subsequently, the processing of the above S702 to S709 is performed.

However, in the case where the background for a pattern satisfies conditions given below if the printing width of a background is further increased by performing the processing of expanding the printing width (background width) of the background multiple times in the above S707, the background may be handled as an error. That is, in the case where the background for a pattern overlaps the background 300 or the image 301, or in the case where the background for a pattern goes beyond the margin region, the background may be handled as an error. In the case where the background is handled as the above error, the entire printing may be stopped, or only the printing of the color reg analysis pattern may be stopped while the printing of the background 300 and the printing of the image 301 are continued without stopping.

As described above, the present Example makes it possible to surely analyze a pattern printed on a sheet even in the case where the sheet is of a color other than white. Hence, the dynamic maintenance can be performed as appropriate.

(Modification of Example 2)

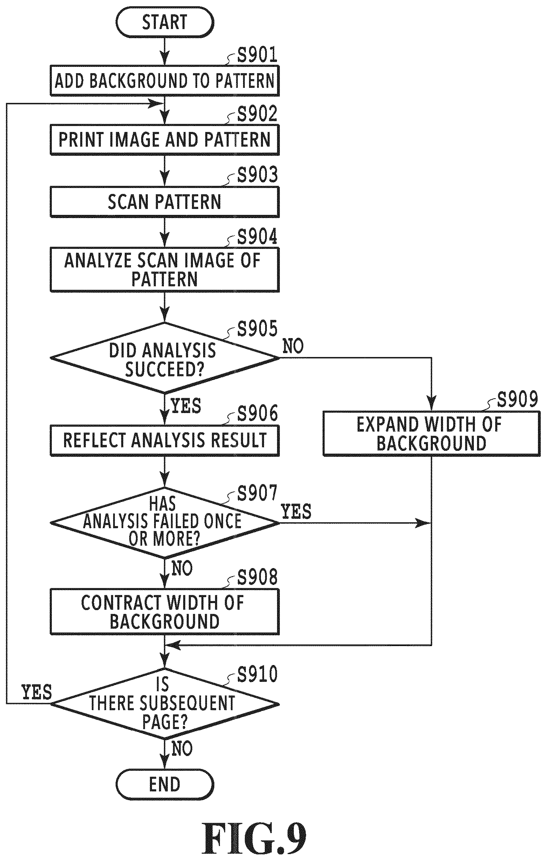

In the present modification, the case of initially printing a background for a predetermined pattern with a maximum area (a maximum background width) and then printing backgrounds for the predetermined pattern with background widths gradually reduced in accordance with analysis results in the second round and later will be described by using the drawings. FIG. 9 is a flowchart showing a flow of dynamic maintenance processing according to the present modification. The series of processing shown in FIG. 9 is performed by the CPU of the control unit 24 of the printing apparatus 100 reading program codes stored in the storage unit 25, extracting the program codes in the RAM, and executing the program codes. Alternatively, part or all of the functions of steps in FIG. 9 may be achieved by hardware such as an ASIC or an electronic circuit. Note that in the present modification, processing different from the processing in the above Example 2 will be mainly described. The contents of processing of S903, S904, and S906 are the same as the contents of processing of S702, S703, and S705, the content of processing of S909 is the same as the content of processing of S707, and the description of these will be omitted. In the above system, once printing processing is started, the processing shown in FIG. 9 is started.

In S901, the control unit 24 instructs the image forming unit 22 to add a background with a maximum width to a color reg analysis pattern.

In S902, based on an instruction from the control unit 24, the image forming unit 22 prints an image and prints a color reg analysis pattern to which the background with the maximum width (the maximum background width) has been added on the roll paper 111. The images are formed based on images designated by the user. For the color reg analysis pattern, the first printing apparatus 103 of the annex section 116 performs pre-printing of a background corresponding to the color reg analysis pattern on the roll paper to form the background with the maximum width among available backgrounds. Then, the roll paper on which the pre-printing has been performed is dried by the drying apparatus 112 and cooled by the cooling apparatus 113. The background is fixed on the roll paper by the above drying and cooling. Thereafter, the second printing apparatus 102 of the main section 115 performs additional printing on the roll paper on which the pre-printing has been performed. In the additional printing, an image and a color reg analysis pattern are printed. Then, the roll paper on which the additional printing has been performed is dried by the drying apparatus 106 and cooled by the cooling apparatuses 108 and 109. The image and the color reg analysis pattern are fixed on the roll paper by the above drying and cooling.

In S905, the control unit 24 receives the analysis result obtained by the inspecting unit 27 through the analysis in S904 and determines whether or not the above analysis succeeded based on the analysis result thus received. This is determined in accordance with whether or not the shape of the printed color reg analysis pattern can be recognized on scan data. In the case where a color difference between the color of the roll paper and the ink color used in printing the color reg analysis pattern is small, since the shape of the above color reg analysis pattern cannot be recognized, it is determined that the above analysis failed. In a case where a determination result that the above analysis did not succeed is obtained (NO in S905), the processing proceeds to S909. On the other hand, in a case where a determination result that the above analysis succeeded (YES in S905), the processing proceeds to S906.

In S907, the control unit 24 checks whether the analysis has failed once or more after the start of printing (dynamic maintenance). For this, failure information is stored in the storage unit 25 at the time of failure, and the determination is made based on the failure information thus stored. That is, the control unit 24 checks whether there was a failure in a previous analysis by the inspecting unit 27. In a case where a check result that the analysis has never failed is obtained (NO in S907), the processing proceeds to S908. In a case where a check result that the analysis has failed once or more is obtained (YES in S907), the processing proceeds to S910. In S908, the control unit 24 instructs the image forming unit 22 to contract the printing width of the background for the color reg analysis pattern in a subsequent page. The size of the contraction of the printing width of the background is a predetermine size. The size of the contraction may be, for example, a size that makes the size of the background 0.9 times the size of the background before the contraction.

In S910, the control unit 24 checks whether or not there is a page subsequent to the page on which an image is currently being printed. In a case where a check result that there is no subsequent page is obtained (NO in S910), the flow shown in FIG. 9 is ended. On the other hand, in a case where a check result that there is a subsequent page is obtained (YES in S910), the processing is returned to S902.

(Processing From S902 To S910 In Second Round)

Processing from S902 to S910 in the second round will be described. Parts different from the processing from S902 to S910 in the first round will be mainly described.

In S902 in the second round, based on an instruction from the control unit 24, the image forming unit 22 prints an image of a subsequent page and prints a color reg analysis pattern which is different from that in S902 in the first round. The images are formed based on images designated by the user in the same manner as in S902 in the first round. As the color reg analysis pattern different from that in S902 in the first round, the first printing apparatus 103 of the annex section 116 performs pre-printing to form a background with a predetermined size corresponding to the background width (the printing width) instructed in the processing from S901 to S910 in the first round at a predetermined position. Then, the roll paper on which the background has been formed is dried by the drying apparatus 112 and cooled by the cooling apparatus 113. The background is fixed on the roll paper by the above drying and cooling. Note that the size of the background formed by the processing of S902 in the second round is a size in which the printing width of the background has been contracted as compared with the size of the background made by the processing of S902 in the first round. Thereafter, the second printing apparatus 102 of the main section 115 performs additional printing on the roll paper on which the background has been formed. In the additional printing, an image and a color reg analysis pattern are printed. The roll paper on which the additional printing of the image and the color reg analysis pattern has been performed is dried by the drying apparatus 106 and cooled by the cooling apparatuses 108 and 109. The image and the color reg analysis pattern are fixed on the roll paper by the above drying and cooling.

In S903 in the second round, based on an instruction from the control unit 24, the connection scanner apparatus 107 obtains a scan image of the color reg analysis pattern obtained by reading the color reg analysis pattern fixed on the roll paper. In S904, based on an instruction from the control unit 24, the inspecting unit 27 analyzes whether or not there is displacement of the color reg and the amount of displacement based on the scan image of the color reg analysis pattern obtained in S903. An analysis result is obtained by the above analysis. In S905, the control unit 24 receives the analysis result obtained by the inspecting unit 27 through the analysis in S904 and determines whether or not the above analysis succeeded based on the analysis result thus received. In a case where a determination result that the above analysis failed is obtained (NO in S905), the processing proceeds to S909. In S909, the control unit 24 instructs the image forming unit 22 to expand the printing width of the background for a color reg analysis pattern in a subsequent page. In S910, the control unit 24 checks whether or not there is a page subsequent to the page on which an image is currently being printed. In a case where a check result that there is no subsequent page is obtained (NO in S910), the flow shown in FIG. 9 is ended. On the other hand, in a case where a check result that there is a subsequent page is obtained (YES in S910), the processing is returned to S902.

(Processing From S902 To S910 In Third Round)

Processing from S902 to S910 in the third round will be described. Parts different from the processing from S902 to S910 in the first round and the second round will be mainly described. Specifically, the description of S902 to S904 in the third round will be omitted. It is assumed that in S904 in the third round, an analysis result that the analysis succeeded is obtained.

In S905, in a case where a determination result that the analysis succeeded is obtained, the control unit 24 transmits the analysis result to the image forming unit 22. In S906, based on an instruction from the control unit 24, the image forming unit 22 corrects displacement of the color reg. In S907, the control unit 24 checks whether the analysis has failed once or more after the start of printing (dynamic maintenance). In a case where a check result that the analysis has failed even once is obtained, in S910, the control unit 24 checks whether or not there is a subsequent page. In a case where a check result that there is a subsequent page is obtained (YES in S910), the processing is returned to S902. The processing described above is repeated, and once the printing of all the pages is completed, the flow shown in FIG. 9 is ended.

However, in the case where the printing width of the background cannot be reduced any more because the color reg analysis pattern would go beyond the background if the printing width of the background were attempted to be further reduced by performing the processing of contracting the printing width of the background multiple times in the above S908 or for other reasons, the following processing may be performed as described below. That is, in the following processing, the printing of a background with the same printing width as that before the processing of contracting the printing width of the background is performed may be performed.

As described above, the present modification makes it possible to surely analyze a pattern printed on a sheet even in the case where the sheet is of a color other than white. Hence the dynamic maintenance using a color ink on a sheet of a color other than white can be performed as appropriate.

In the above description, the example of printing a color reg analysis pattern on each page has been described; however, the processing is not limited to this. For example, a color reg analysis pattern may be printed on every a certain number of pages. In addition, in the case where the printing width of the background has been changed, the additional printing of a color reg analysis pattern may be stopped until the background of the newly changed printing width which has been printed on the roll paper reaches the second printing apparatus 102 of the main section 115. Until the form of the background is determined, the frequency of printing a color reg analysis pattern may be reduced, so that no wasted color reg analysis pattern is printed by the time when the feedback processing on the analysis result of a scan image of the pattern is completed. Since the time taken for drying a background varies depending on whether or not there is a background present, the conveyance speed may be controlled simultaneously with the control of the printing width of the background.

(Example 3)

In the present Example, the case of automatically determining whether or not there is a background and adjusting a cover rate of the background at the time of dynamic maintenance will be described by using the drawings. The cover rate represents how much the background transmits the color of paper by means of percentage. In the case where a background of a light color is formed by using a reduced amount of an ink, since even in a portion where the background is present, the color of paper on the back side of the background is transmitted to the front side of the background and can be seen on the front side of the background, it can be said that the cover rate is low. On the other hand, in the case where a background of a very dark color is formed by using an increased amount of an ink, since in a portion where the background is present, the color of paper on the back side of the background is hardly transmitted to the front side of the background, it can be said that the cover rate is high. The present Example is a mode in which only a pattern with no background is initially printed, and then the background is printed while the cover rate is gradually increased from a minimum cover rate in accordance with an analysis result of the pattern in the second round and later.

(In the Case of Increasing Cover rate of Background)

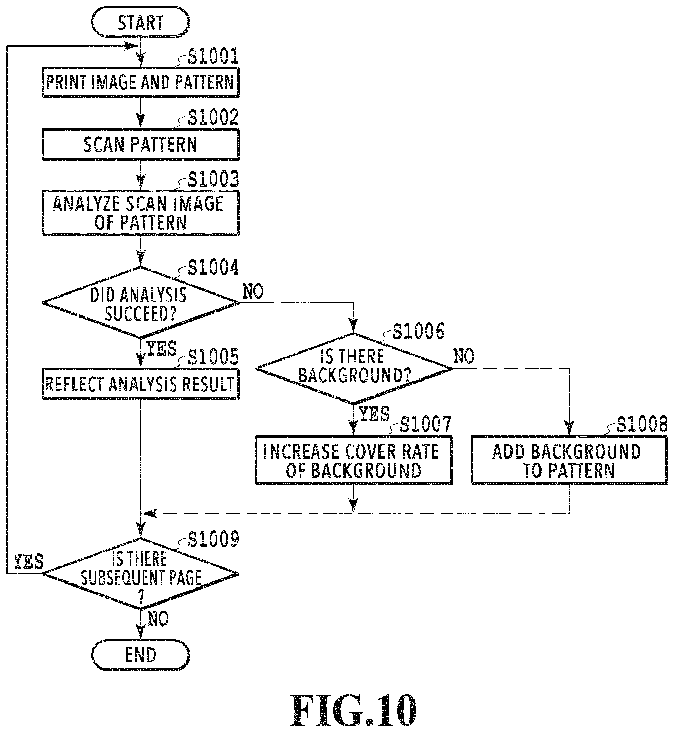

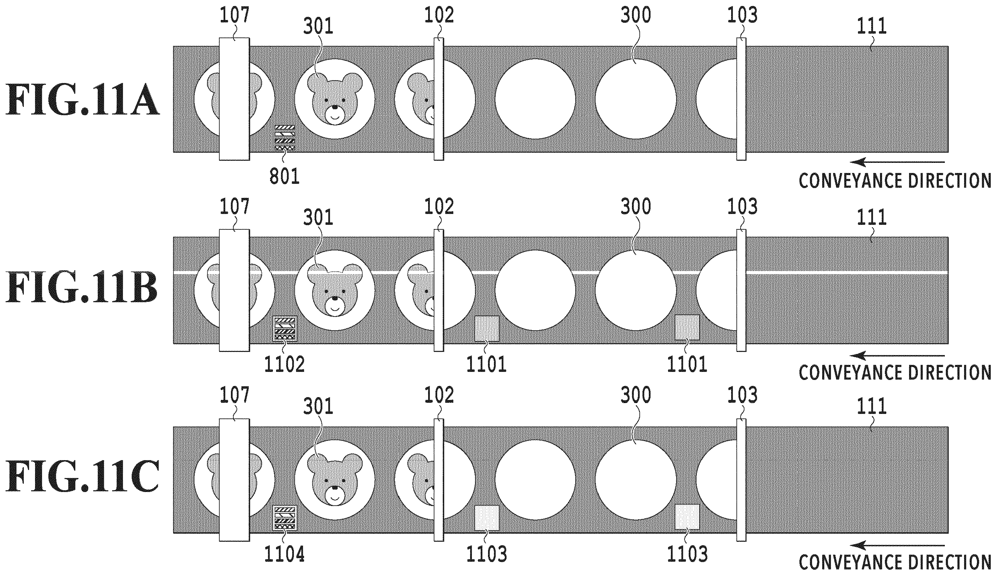

FIG. 10 is a flowchart showing a flow of dynamic maintenance processing according to the present Example. The series of processing shown in FIG. 10 is performed by the CPU of the control unit 24 of the printing apparatus 100 reading program codes stored in the storage unit 25, extracting the program codes in the RAM, and executing the program codes. Alternatively, part or all of the functions of steps in FIG. 10 may be achieved by hardware such as an ASIC or an electronic circuit. FIGs. 11A to 11C are diagrams for explaining the dynamic maintenance processing according to the present Example. FIG. 11A shows a state at the time of printing a pattern with no background and an image, FIG. 11B shows a state at the time of printing a pattern with a background and an image, and FIG. 11C shows a state at the time of printing a pattern with a background having an increased cover rate as compared with the case of FIG. 11B and an image. In the present Example, processing different from the above Example 2 will be mainly described. The contents of processing from S1002 to S1005 are the same as the contents of processing from S702 to S705, and the description of these will be omitted. In the above system, once printing processing is started, the processing shown in FIG. 10 is started.

In S1001, based on an instruction from the control unit 24, the image forming unit 22 prints a background 300 for an image 301 and the image 301 and prints a color reg analysis pattern 801 on the roll paper 111 as shown in FIG. 11A. Note that the content of processing of S1001 is the same as the content of processing of S701, and the detailed description of the content of the processing of S1001 will be omitted.

In S1006, the control unit 24 checks whether or not a background has been printed on the roll paper. That is, the control unit 24 determines whether or not a color reg pattern with a background has been currently printed. This is determined by storing information indicating whether or not a background has been printed in the storage unit 25 and referring to the stored information. In a case where a check result that a background has not been printed is obtained (NO in S1006), the processing proceeds to S1008. On the other hand, in a case where a check result that a background has been printed is obtained (YES in S1006), the processing proceeds to S1007.

In S1007, for a background for a color reg analysis pattern, the control unit 24 instructs the image forming unit 22 to increase the cover rate of the background in a subsequent page. The size of the cover rate is increased at a predetermined proportion. For example, the size of the cover rate may be increased to a size 1.1 times the size of the cover rate of the background before the increase. With this, in the case where there is a subsequent page of the roll paper, in S1001, a background is printed with a relatively increased cover rate on the subsequent page of the roll paper, and a pattern is printed on the background thus printed with the relatively increased cover rate.

In S1008, the control unit 24 instructs the image forming unit 22 to add a background to a color reg analysis pattern in the subsequent page. The above instruction is, for example, such an instruction that adds a background having a minimum cover rate to a color reg analysis pattern in the subsequent page. With this, in the case where there is a subsequent page of the roll paper, a background having a minimum cover rate is printed on the subsequent page of the roll paper and a pattern is printed on the background thus printed, in S1001.

In S1009, the control unit 24 checks whether or not there is a page subsequent to the page on which an image is currently being printed. In a case where a check result that there is no subsequent page is obtained (NO in S1009), the flow shown in FIG. 10 is ended. On the other hand, in a case where a check result that there is a subsequent page is obtained (YES in S1009), the processing is returned to S1001.

(Processing From S1001 To S1009 In Second Round)

Processing from S1001 to S1009 in the second round will be described. Parts different from the processing from S1001 to S1009 in the first round will be mainly described.

In S1001 in the second round, based on an instruction from the control unit 24, the image forming unit 22 prints an image of a subsequent page and prints a color reg analysis pattern which is different from that in S1001 in the first round. An image 301 is formed based on an image designated by the user in the same manner as in the first round. Since the pattern is changed to a pattern with a background as the color reg analysis pattern which is different from that in S1001 in the first round, the first printing apparatus 103 of the annex section 116 performs pre-printing to form a background 1101 with a predetermined size and a predetermined cover rate at a predetermined position. The above predetermined cover rate is assumed to be, for example, a minimum cover rate, which is minimum within a range within which the cover rate of the background can be adjusted. Then, the roll paper on which the background 300 and the background 1101 have been formed is dried by the drying apparatus 112 and cooled by the cooling apparatus 113. The background 300 and the background 1101 are fixed on the roll paper by the above drying and cooling. Thereafter, the second printing apparatus 102 of the main section 115 performs additional printing on the roll paper on which the background 300 and the background 1101 have been formed. In the additional printing, the image 301 and a color reg analysis pattern 1102 are printed. Then, the roll paper on which the additional printing of the image 301 and the color reg analysis pattern 1102 has been performed is dried by the drying apparatus 106 and cooled by the cooling apparatuses 108 and 109. The image 301 and the color reg analysis pattern 1102 are fixed on the roll paper by the above drying and cooling as shown in FIG. 11B. The background 1101 has a low cover rate as described above and slightly transmits the color of the roll paper in the case where the roll paper is color paper.

In S1002 in the second round, based on an instruction from the control unit 24, the connection scanner apparatus 107 obtains a scan image of the color reg analysis pattern obtained by reading the color reg analysis pattern 1102 fixed on the roll paper. In S1003, based on an instruction from the control unit 24, the inspecting unit 27 analyzes displacement of the color reg and the amount of displacement based on the scan image of the color reg analysis pattern 1102 obtained in S1002. An analysis result is obtained by the above analysis. In S1004, the control unit 24 receives the analysis result obtained by the inspecting unit 27 through the analysis in S1003 and determines whether or not the above analysis succeeded based on the analysis result thus received. In a case where a determination result that the above analysis failed is obtained (NO in S1004), the processing proceeds to S1006. In S1006, the control unit 24 checks whether or not a background has been printed on the roll paper. In a case where a check result that the background has been printed is obtained (YES in S1006), the processing proceeds to S1007. In S1007, the control unit 24 instructs the image forming unit 22 to increase the cover rate of the background for a color reg analysis pattern in a subsequent page. In S1009, the control unit 24 checks whether or not there is a page subsequent to the page on which an image is currently being printed. In a case where a check result that there is no subsequent page is obtained (NO in S1009), the flow shown in FIG. 10 is ended. In a case where a check result that there is a subsequent page is obtained (YES in S1009), the process is returned to S1001.

(Processing From S1001 To S1009 In Third Round)

Processing from S1001 to S1009 in the third round will be described. Parts different from the processing from S1001 to S1009 in the first round and the second round will be mainly described.

In S1001 in the third round, based on an instruction from the control unit 24, the image forming unit 22 prints an image of a subsequent page and prints a color reg analysis pattern which is different from those in S1001 in the first round and the second round. A background 300 and an image 301 are formed based on images designated by the user in the same manner as in the first round and the second round. As the color reg analysis pattern different from those in S1001 in the first round and the second round, the first printing apparatus 103 of the annex section 116 performs pre-printing to form a background 1103 with a predetermined size and a predetermined cover rate at a predetermined position. Then, the roll paper on which the background 300 and the background 1103 have been formed is dried by the drying apparatus 112 and cooled by the cooling apparatus 113. The background 1103 is fixed on the roll paper by the above drying and cooling. Since the cover rate of the background 1103 is set to a cover rate higher than the cover rate of the background 1101, the color of the roll paper itself is unlikely to be transmitted. Thereafter, the second printing apparatus 102 of the main section 115 performs additional printing on the roll paper on which the background 300 and the background 1103 have been formed. In the additional printing, the image 301 and a color reg analysis pattern 1104 are printed. Then, the roll paper on which the additional printing of the image 301 and the color reg analysis pattern 1104 has been performed is dried by the drying apparatus 106 and cooled by the cooling apparatuses 108 and 109. The image and the color reg analysis pattern 1104 are fixed on the roll paper by the above drying and cooling as shown in FIG. 11C. Subsequently, the processing of the above S1002 to S1009 is performed.

However, in the case where the cover rate cannot be increased any more by performing the processing of increasing the cover rate of the background multiple times in the above S1007 because of the configurations of the apparatuses, the processing may be handled as an error. In the case where the processing is handled as the above error, the entire printing may be stopped, or only the printing of the color reg analysis pattern may be stopped while the printing of the background 300 and the printing of the image 301 are continued without stopping.

As described above, the present Example makes it possible to surely analyze a pattern printed on a sheet even in the case where the sheet is of a color other than white. Hence, the dynamic maintenance using a color ink on a sheet of a color other than white can be conducted as appropriate.

(Modification of Example 3)

(In the Case of Reducing Cover rate of Background)

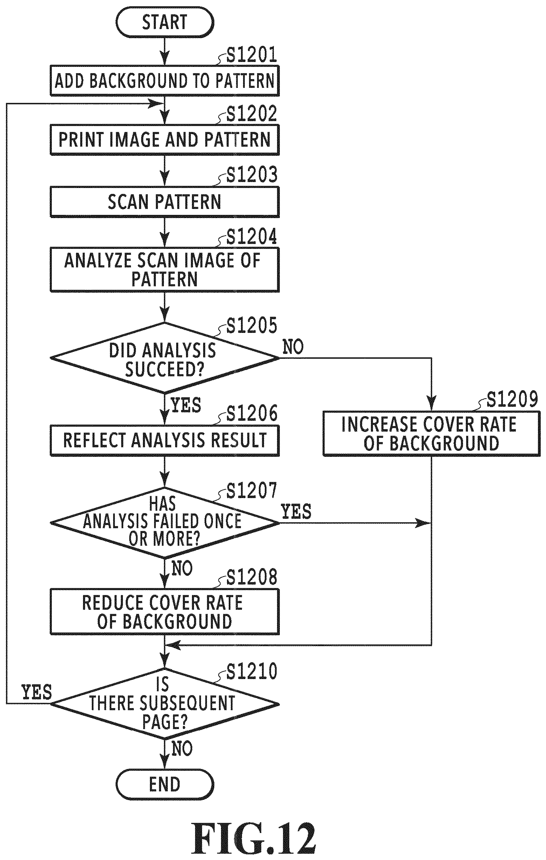

In the present modification, the case of initially printing a background for a predetermined pattern with a maximum cover rate and then printing backgrounds with cover rates gradually reduced in accordance with analysis results in the second round and later will be described by using the drawings. FIG. 12 is a flowchart showing a flow of dynamic maintenance processing according to the present modification. The series of processing shown in FIG. 12 is performed by the CPU of the control unit 24 of the printing apparatus 100 reading program codes stored in the storage unit 25, extracting the program codes in the RAM, and executing the program codes. Alternatively, part or all of the functions of steps in FIG. 12 may be achieved by hardware such as an ASIC or an electronic circuit. Note that in the present modification, processing different from the processing in the above Example 3 will be mainly described. The processing from S1203 to S1206 is the same as the processing from S1002 to S1005 and the processing of S1209 and S1210 is the same as the processing of S1007 and S1009, respectively, and the description of these will be omitted. Note that in the above system, once printing processing is started, the processing shown in FIG. 12 is started.

In S1201, the control unit 24 instructs the image forming unit 22 to add a background having a maximum cover rate to a color reg analysis pattern.

In S1202, based on an instruction from the control unit 24, the image forming unit 22 prints an image and prints a color reg analysis pattern to which the background having the maximum cover rate has been added on the roll paper 111. The images are formed based on images designated by the user. For the color reg analysis pattern, the first printing apparatus 103 of the annex section 116 performs pre-printing of a background corresponding to the color reg analysis pattern on the roll paper to form the background having the maximum cover rate among available backgrounds. Then, the roll paper on which the pre-printing has been performed is dried by the drying apparatus 112 and cooled by the cooling apparatus 113. The background is fixed on the roll paper by the above drying and cooling. Thereafter, the second printing apparatus 102 of the main section 115 performs additional printing on the roll paper on which the pre-printing has been performed. In the additional printing, an image and a color reg analysis pattern are printed. Then, the roll paper on which the additional printing has been performed is dried by the drying apparatus 106 and cooled by the cooling apparatuses 108 and 109. The image and the color reg analysis pattern with the background having the maximum cover rate are fixed on the roll paper by the above drying and cooling.

In S1205, the control unit 24 receives the analysis result obtained by the inspecting unit 27 through the analysis in S1204 and determines whether or not the above analysis succeeded based on the analysis result thus received. This is determined in accordance with whether or not the shape of the printed color reg analysis pattern can be recognized on scan data. In a case where a determination result that the shape of the color reg analysis pattern cannot be recognized and the analysis did not succeed is obtained (NO in S1205), the processing proceeds to S1209. On the other hand, in a case where a determination result that the above analysis succeeded is obtained (YES in S1205), the processing proceeds to S1206.

In S1207, the control unit 24 checks whether the analysis has failed once or more after the start of printing (dynamic maintenance). For this, failure information is stored in the storage unit 25 at the time of failure, and the determination is made based on the failure information thus stored. That is, the control unit 24 checks whether there was a failure in a previous analysis by the inspecting unit 27. In a case where a check result that the analysis has never failed is obtained (NO in S1207), the processing proceeds to S1208. On the other hand, in a case where a check result that the analysis has failed once or more is obtained (YES in S1207), the processing proceeds to S1210. In S1208, the control unit 24 instructs the image forming unit 22 to reduce the cover rate of the background for the color reg analysis pattern in a subsequent page. The size of the reduction in the cover rate of the background is a size of reduction at a predetermined proportion. The size of the reduction in the cover rate of the background may be, for example, a size that makes the cover rate 0.9 times the cover rate of the background before the reduction.

In S1210, the control unit 24 checks whether or not there is a page subsequent to the page on which an image is currently being printed. In a case where a check result that there is no subsequent page is obtained (NO in S1210), the flow shown in FIG. 12 is ended. On the other hand, in a case where a check result that there is a subsequent page is obtained (YES in S1210), the processing is returned to S1202.

(Processing From S1202 To S1210 In Second Round)

Processing from S1202 to S1210 in the second round will be described. Parts different from the processing from S1202 to S1210 in the first round will be mainly described.

In S1202 in the second round, based on an instruction from the control unit 24, the image forming unit 22 prints an image of a subsequent page and prints a color reg analysis pattern which is different from that in S1202 in the first round. The image is formed based on an image designated by the user in the same manner as in S1202 in the first round. As the color reg analysis pattern different from that in S1202 in the first round, the first printing apparatus 103 of the annex section 116 performs pre-printing to form a background with a predetermined cover rate corresponding to the size of the cover rate instructed in the processing from S1201 to S1210 in the first round at a predetermined position. Then, the roll paper on which the background has been formed is dried by the drying apparatus 112 and cooled by the cooling apparatus 113. The background is fixed on the roll paper by the above drying and cooling. Note that the size of the cover rate of the background in the processing of S1202 in the second round is a reduced cover rate of the background as compared with the size of the cover rate of the background in the processing of S1202 in the first round. Thereafter, the second printing apparatus 102 of the main section 115 performs additional printing on the roll paper on which the background has been formed. In the additional printing, the image and a color reg analysis pattern are printed. The roll paper on which the additional printing of the image and the color reg analysis pattern has been performed is dried by the drying apparatus 106 and cooled by the cooling apparatuses 108 and 109. The image and the color reg analysis pattern are fixed on the roll paper by the above drying and cooling.

In S1203 in the second round, based on an instruction from the control unit 24, the connection scanner apparatus 107 obtains a scan image of the color reg analysis pattern obtained by reading the color reg analysis pattern fixed on the roll paper. In S1204, based on an instruction from the control unit 24, the inspecting unit 27 analyzes whether or not there is displacement of the color reg and the amount of displacement based on the scan image of the color reg analysis pattern obtained in S1203. An analysis result is obtained by the above analysis. In S1205, the control unit 24 receives the analysis result obtained by the inspecting unit 27 through the analysis in S1204 and determines whether or not the above analysis succeeded based on the analysis result thus received. In a case where a determination result that the above analysis failed is obtained (NO in S1205), the processing proceeds to S1209. In S1209, the control unit 24 instructs the image forming unit 22 to increase the cover rate of the background for the color reg analysis pattern in a subsequent page. In S1210, the control unit 24 checks whether or not there is a page subsequent to the page on which an image is currently being printed. In a case where a check result that there is no subsequent page is obtained (NO in S1210), the flow shown in FIG. 12 is ended. On the other hand, in a case where a check result that there is a subsequent page is obtained (YES in S1210), the processing is returned to S1202.

(Processing From S1202 To S1210 In Third Round)

Processing from S1202 to S1210 in the third round will be described. Parts different from the processing from S1202 to S1210 in the first round and the second round will be mainly described. Specifically, the description of S1202 to S1204 in the third round will be omitted. It is assumed that an analysis result that the analysis succeeded is obtained in S1204 in the third round.

In a case where a determination result that the analysis succeeded is obtained in S1205, the control unit 24 transmits the analysis result to the image forming unit 22. In S1206, based on an instruction from the control unit 24, the image forming unit 22 corrects displacement of the color reg. In S1207, the control unit 24 checks whether the analysis has failed once or more after the start of printing (dynamic maintenance). In a case where a check result that the analysis has failed even once is obtained, in S1210, the control unit 24 checks whether or not there is a subsequent page. In a case where a check result that there is a subsequent page is obtained (YES in S1210), the processing is returned to S1202. The processing described above is repeated, and once the printing of all the pages is completed, the flow shown in FIG. 12 is ended.

However, in the case where the cover rate cannot be reduced any more by performing the processing of reducing the cover rate of the background multiple times in the above S1208 because of the configurations of the apparatuses, subsequent processing may be performed such that the background is printed with the same cover rate as that before the processing of reducing the cover rate of the background is conducted.

As described above, the present Example makes it possible to surely analyze a pattern printed on a sheet even in the case where the sheet is of a color other than white. Hence, the dynamic maintenance using a color ink on a sheet of a color other than white can be conducted as appropriate.

In the above description, the example of printing a color reg analysis pattern on each page has been described; however, the processing is not limited to this. For example, a color reg analysis pattern may be printed on every a certain number of pages. In addition, in the case where the cover rate of the background has been changed, the additional printing of a color reg analysis pattern may be stopped until the background of the newly changed cover rate which has been printed on the roll paper reaches the second printing apparatus 102 of the main section 115. Until the form of the background is determined, the frequency of printing a color reg analysis pattern may be reduced so that no wasted color reg analysis pattern would be printed by the time when the feedback processing on the analysis result of a scan image of the pattern is completed. Since the time taken for drying a background varies depending on the size of the cover rate of the background, the conveyance speed may be controlled simultaneously with the control of the cover rate of the background.

(Example 4)

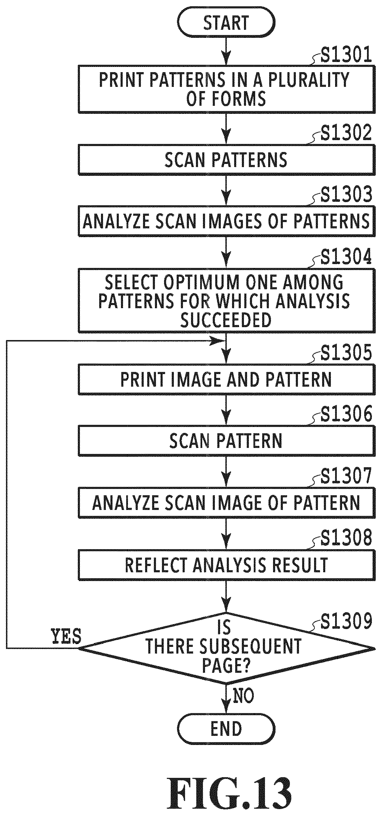

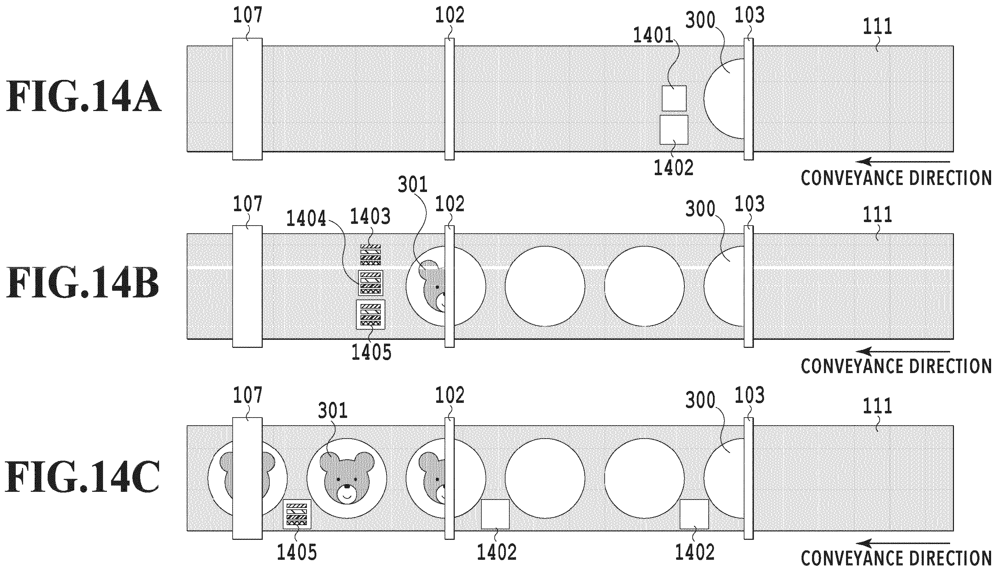

In the present Example, the case of simultaneously printing patterns of a plurality of forms and automatically determining a pattern of a form to be used in dynamic maintenance among the patterns of the plurality of forms will be described by using the drawings. FIG. 13 is a flowchart showing a flow of dynamic maintenance processing according to the present Example. The series of processing shown in FIG. 13 is performed by the CPU of the control unit 24 of the printing apparatus 100 reading program codes stored in the storage unit 25, extracting the program codes in the RAM, and executing the program codes. Alternatively, part or all of the functions of steps in FIG. 13 may be achieved by hardware such as an ASIC or an electronic circuit. FIGs. 14A to 14C are diagrams for explaining the dynamic maintenance processing according to the present Example. FIG. 14A shows a state in which there is no background and backgrounds of two sizes are simultaneously printed, FIG. 14B shows a state in which patterns of three forms are simultaneously printed, and FIG. 14C shows a state where a pattern of a selected form is printed. The contents of processing of S1306, S1307, and S1308 are the same as the contents of processing of S702, S703, and S705, the processing of S1309 is the same as the content of processing of S709, and the description of these will be omitted. Note that in the above system, once printing processing is started, the processing shown in FIG. 13 is started.

In S1301, based on an instruction from the control unit 24, the image forming unit 22 prints color reg analysis patterns in a plurality of forms on the roll paper 111. The first printing apparatus 103 of the annex section 116 performs pre-printing of color reg analysis patterns to form backgrounds 1401 and 1402 in a plurality of forms as shown in FIG. 14A. The roll paper on which the backgrounds 1401 and 1402 in the plurality of forms have been printed is dried by the drying apparatus 112 and cooled by the cooling apparatus 113. The backgrounds 1401 and 1402 are fixed on the roll paper by the above drying and cooling. Thereafter, the second printing apparatus 102 of the main section 115 performs additional printing on the roll paper on which the pre-printing has been performed. In the additional printing, color reg analysis patterns 1403, 1404, and 1405 are printed. Then, the roll paper on which the additional printing has been performed is dried by the drying apparatus 106 and cooled by the cooling apparatuses 108 and 109. The color reg analysis patterns 1403, 1404, and 1405 are fixed on the roll paper by the above drying and cooling as shown in FIG. 14B. In this additional printing, there may be a pattern with no background among the color reg analysis patterns in a plurality of forms. Sign 1403 indicates a color reg analysis pattern with no background, Sign 1404 indicates a color reg analysis pattern with a background, and Sign 1405 indicates a color reg analysis pattern with a background. However, the background width of a background 1402 for the color reg analysis pattern 1405 with a background is assumed to be larger than the background width of a background 1401 for the color reg analysis pattern 1404 with a background.

In S1302, based on an instruction from the control unit 24, the connection scanner apparatus 107 obtains scan images of the plurality of color reg analysis patterns obtained by reading the color reg analysis patterns in the plurality of forms fixed on the roll paper.

In S1303, based on an instruction from the control unit 24, the inspecting unit 27 analyzes whether or not there is displacement of the color reg and the amount of displacement based on the scan images of the color reg analysis patterns obtained in S1302 for each of the plurality of color reg analysis patterns.

In S1304, the control unit 24 receives the analysis result obtained by the inspecting unit 27 through the analysis in S1303 and determines whether or not the above analysis succeeded based on the analysis result thus received for each of the plurality of color reg analysis patterns. This is determined in accordance with whether or not the shape of each color reg analysis pattern can be recognized on scan data (scan image). The control unit 24 selects a color reg analysis pattern in which the smallest amount of the ink is used for the background among color reg analysis patterns for which the above analysis succeeded. In the case where the analysis of a color reg analysis pattern with no background succeeded, the color reg analysis pattern with no background is selected. In the case where the analysis of a color reg analysis pattern with no background failed, a color reg analysis pattern with a background in which the background has the smallest printing width is selected among color reg analysis patterns with backgrounds for which the analysis of the color reg analysis pattern (could) succeeded.

In S1305, an image is printed and the color reg analysis pattern is printed. A background 300 and an image 301 are formed based on images designated by the user. The color reg analysis pattern is formed based on the color reg analysis pattern selected in S1304. Here, the description is given on the assumption that the pattern of Sign 1405 is selected. The first printing apparatus 103 of the annex section 116 performs pre-printing on the roll paper. Then, the roll paper on which the pre-printing has been performed is dried by the drying apparatus 112 and cooled by the cooling apparatus 113. The background 1401 is fixed on the roll paper by the above drying and cooling. Thereafter, the second printing apparatus 102 of the main section 115 performs additional printing on the roll paper on which the pre-printing has been performed. In the additional printing, the color reg analysis pattern is printed. Thereafter, the roll paper on which the additional printing has been performed is dried by the drying apparatus 106 and cooled by the cooling apparatuses 108 and 109. The color reg analysis pattern 1405 is fixed on the roll paper by the above drying and cooling as shown in FIG. 14C.

In the above description, the example of printing color reg analysis patterns with backgrounds having different printing widths has been described; however, the processing is not limited to this. Color reg analysis patterns with backgrounds having different cover rates may be printed, or color reg analysis patterns different in combination of printing widths of backgrounds and cover rates of the backgrounds may be printed. In the above description, the formation of images designated by the user is started after a color reg analysis pattern is scanned and analyzed; however, the processing is not limited to this. As shown in FIGs. 14A and 14B, the formation of the background 300 and the image 301 may be started before the scanning in S1302. In this case, it is possible not to print a color reg analysis pattern on a margin region until an optimum pattern is selected, and to start printing the color reg analysis pattern after the optimum pattern is selected. Since the time taken for drying a background varies depending on whether or not there is a background, the size of the printing width of the background, and the size of the cover rate of the background, the conveyance speed of the roll paper may be controlled simultaneously with the control of whether or not there is a background, the size of the printing width of the background, and the size of the cover rate of the background.

As described above, the present Example makes it possible to surely analyze a pattern printed on a sheet even in the case where the sheet is of a color other than white. Hence, the dynamic maintenance using a color ink on a sheet of a color other than white can be conducted as appropriate.

In the above description, color information indicating the color of the roll paper is obtained from a scan image of the roll paper which is obtained by scanning the roll paper with a scanner; however, the processing is not limited to this. For example, a configuration that color information indicating the color of the roll paper is obtained by using a sensor may be employed. The roll paper may be a sheet of any type. As the roll paper, for example, a cut sheet may be used. The roll paper is not limited to paper, and for example, a fabric, a plastic film, or another material may be used. The material of the paper is not limited in particular. In addition, regardless of the statement, a color paper, the color and properties of the paper are not limited in particular, and may be transparent paper, metallic paper, or the like. In addition, although the image 301 is an image containing the background 300, an image with no background may be employed. Besides, the background 300 and the image 301 may be images that are different from page to page. In the above description, there are two image forming units of the annex section and the main section, the number of the image forming units may be one. In the case where there is one image forming unit, it is possible to separate the printing of a background and the printing of a pattern by passing a sheet through the image forming unit twice.

In the above description, the case of employing a color reg analysis pattern has been described; however, the processing is not limited to this. For example, it is also possible to employ a color unevenness detection pattern for detecting color unevenness. In this case, for cyan, an ink is ejected from all the nozzles of the cyan head while a gradation is changed. Patterns of the same gradation that are different in darkness of the color among locations are determined to be uneven. That is, unevenness is determined by analyzing a scan image of the color unevenness detection pattern. Then, adjustment is performed to eliminate the color unevenness in accordance with a analysis result obtained by the above analysis.

It is also possible to employ an ejection defect detection pattern for detecting an ejection defect. In this case, for cyan, an ink is ejected from all the nozzles of the cyan head to print an image of entirely cyan, and a region where a white streak is formed is determined to be a region of an ejection defect. That is, a region of an ejection defect is determined by analyzing a scan image of the above ejection defect detection pattern. Then, adjustment is performed to eliminate the above ejection defect in accordance with an analysis result obtained by the above analysis.

It is also possible to employ a color tone detection pattern for detecting color tone. In this case, color tone is determined by analyzing a scan image of the above color tone detection pattern. Then, the above color tone is adjusted in accordance with an analysis result obtained by the above analysis.

[Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

The technique of the present disclosure makes it possible to surely analyze a pattern printed on a sheet.

While the present disclosure has been described with reference to exemplary embodiments, it is to be understood that the invention is not limited to the disclosed exemplary embodiment.

## Claims

1. A printing apparatus (100) comprising:

   an obtaining unit (107) configured to obtain color information indicating a color of a sheet (111) to be used in printing from a scan image of the sheet (111); and
   an image forming unit (103,102) configured to print, based on the color information, a background for a predetermined pattern to be formed on the sheet (111) and print the predetermined pattern on the sheet (111);
   **characterized by**:

   a second analyzing unit configured to analyze a scan image of the predetermined pattern, wherein
   the obtaining unit obtains, as the scan image of the sheet, the scan image of the predetermined pattern obtained by scanning the predetermined pattern printed by the image forming unit, and
   in a case where the second analyzing unit cannot recognize the predetermined pattern in the scan image of the predetermined pattern and the background is printed, the image forming unit prints the background which is relatively expanded or has a relatively increased cover rate and then prints the predetermined pattern on a subsequent page of the sheet.

2. The printing apparatus according to claim 1, wherein the obtaining unit obtains the scan image while the printing apparatus is printing an image.

3. The printing apparatus according to claim 1 or 2, wherein
   the image forming unit

   calculates a Euclidean distance between a value of an L*a*b* color space obtained by converting the color information and a value of an L*a*b* color space obtained by converting color information indicating a color of the predetermined pattern, and
   prints the background and then prints the predetermined pattern in accordance with a relation between the calculated Euclidean distance and a predetermined threshold.

4. The printing apparatus according to claim 3, wherein in a case where the calculated Euclidean distance is less than or equal to the predetermined threshold, the image forming unit prints the background and then prints the predetermined pattern.

5. The printing apparatus according to claim 3 or 4, wherein
   in a case where the calculated Euclidean distance is larger than the predetermined threshold, the image forming unit does not print the background and prints the predetermined pattern.

6. The printing apparatus according to any one of claims 1 to 5, further comprising:

   a first analyzing unit configured to analyze the scan image of the sheet by using the color information and color information of the predetermined pattern, wherein
   the image forming unit prints the background and then prints the predetermined pattern in accordance with an analysis result obtained by the first analyzing unit through the analysis.

7. The printing apparatus according to claim 6, further comprising:
   a storing unit configured to store the analysis result.

8. The printing apparatus according to claim 7, wherein the storing unit stores the analysis result for each type of the sheet.

9. The printing apparatus according to any one of claims 1 to 8, wherein
   in a case where the second analyzing unit cannot recognize the predetermined pattern in the scan image of the predetermined pattern and the background is not printed, the image forming unit prints the background and then prints the predetermined pattern on a subsequent page of the sheet.

10. The printing apparatus according to any one of claims 1 to 8, wherein
    in a case where the second analyzing unit can recognize the predetermined pattern in the scan image of the predetermined pattern and there was no failure in a previous analysis by the second analyzing unit, the image forming unit prints the background which is relatively contracted and then prints the predetermined pattern on a subsequent page of the sheet.

11. The printing apparatus according to any one of claims 1 to 8, wherein
in a case where the second analyzing unit can recognize the predetermined pattern in the scan image of the predetermined pattern and there was no failure in a previous analysis by the second analyzing unit, the image forming unit prints the background which has a relatively reduced cover rate and then prints the predetermined pattern on a subsequent page of the sheet.

12. The printing apparatus according to any one of claims 1 to 11, further comprising:

a controlling unit configured to adjust printing by the printing apparatus, wherein
the obtaining unit obtains a scan image of the predetermined pattern obtained by scanning the predetermined pattern printed on the sheet by the image forming unit, and
the controlling unit adjusts the printing by the printing apparatus in accordance with an analysis result obtained by analyzing the scan image of the predetermined pattern obtained by the obtaining unit.

13. The printing apparatus according to claim 12, wherein

the image forming unit prints the predetermined pattern for detecting color misregistration on the sheet, and
the controlling unit performs adjustment to eliminate the color misregistration in accordance with an analysis result obtained by analyzing the scan image of the predetermined pattern obtained by the obtaining unit.

14. The printing apparatus according to claim 12, wherein

the image forming unit prints the predetermined pattern for detecting color unevenness on the sheet, and
the controlling unit performs adjustment to eliminate the color unevenness in accordance with an analysis result obtained by analyzing the scan image of the predetermined pattern obtained by the obtaining unit.

15. The printing apparatus according to claim 12, wherein

the image forming unit includes a print head corresponding to a color of the predetermined pattern,
the image forming unit prints the predetermined pattern for detecting an ejection defect of the print head on the sheet, and
the controlling unit performs adjustment to eliminate the ejection defect in accordance with an analysis result obtained by analyzing the scan image of the predetermined pattern obtained by the obtaining unit.

16. The printing apparatus according to claim 12, wherein

the image forming unit prints the predetermined pattern for detecting color tone on the sheet, and
the controlling unit adjusts the color tone in accordance with an analysis result obtained by analyzing the scan image of the predetermined pattern obtained by the obtaining unit.

17. The printing apparatus according to any one of claims 1 to 16, wherein

the image forming unit prints the backgrounds in a plurality of forms which are different in at least one of size and cover rate on the sheet and prints the predetermined pattern on each of the backgrounds in the plurality of forms and the sheet as patterns in a plurality of forms,
the second analyzing unit analyzes the patterns in the plurality of forms to select a pattern in a form to be used in the printing, and
the image forming unit prints the background corresponding to the pattern in the form thus selected and then prints the predetermined pattern.

18. The printing apparatus according to any one of claims 1 to 17, wherein
the image forming unit prints the background on a margin region in the sheet and then prints the predetermined pattern.

19. The printing apparatus according to any one of claims 1 to 18, wherein

the image forming unit includes:

a first image forming unit configured to print the background on the sheet; and
a second image forming unit provided downstream of the first image forming unit and configured to print the predetermined pattern on the background, and

a color difference between color information indicating a color of the background and color information indicating a color of the predetermined pattern is larger than a predetermined threshold.

20. A printing method comprising:

an obtaining step of obtaining color information indicating a color of a sheet to be used in printing from a scan image of the sheet; and
an image forming step of printing, based on the color information, a background for a predetermined pattern to be formed on the sheet and then printing the predetermined pattern on the sheet;
**characterized by**:

an analyzing step of analyzing a scan image of the predetermined pattern, wherein
the scan image of the predetermined pattern obtained by scanning the predetermined pattern printed in the image forming step is obtained, and
in a case where the predetermined pattern in the scan image of the predetermined pattern cannot be recognized in the analyzing step and the background is printed, the background which is relatively expanded or has a relatively increased cover rate is printed and then the predetermined pattern is printed in the image forming step on a subsequent page of the sheet.

21. A program comprising instructions which, when the program is executed by a computer, cause the computer to operate as the printing apparatus according to any one of claims 1 to 19.

22. A non-transitory computer readable storage medium storing a program according to claim 21.

**Patentansprüche**

1. Druckvorrichtung (100), umfassend:

eine Bezugseinheit (107), die konfiguriert ist, Farbinformationen aus einem Scanbild des Bogens (111) zu beziehen, die eine Farbe eines beim Drucken zu verwendenden Bogens (111) angeben; und
eine Bilderzeugungseinheit (103, 102), die konfiguriert ist, basierend auf den Farbinformationen einen Hintergrund für ein auf dem Bogen (111) zu erzeugendes vorbestimmtes Muster zu drucken und das vorbestimmte Muster auf den Bogen (111) zu drucken;
**gekennzeichnet durch**:

eine zweite Analyseeinheit, die konfiguriert ist, ein Scanbild des vorbestimmten Musters zu analysieren, wobei
die Bezugseinheit als das Scanbild des Bogens das Scanbild des vorbestimmten Musters bezieht, das durch Scannen des durch die Bilderzeugungseinheit gedruckten vorbestimmten Musters erhalten wird, und
falls die zweite Analyseeinheit das vorbestimmte Muster in dem Scanbild des vorbestimmten Musters nicht erkennen kann und der Hintergrund gedruckt wird, die Bilderzeugungseinheit den Hintergrund, der relativ vergrößert ist oder eine relativ erhöhte Abdeckungsrate aufweist, und dann das vorbestimmte Muster auf eine nachfolgende Seite des Bogens druckt.

2. Druckvorrichtung nach Anspruch 1, wobei die Bezugseinheit das Scanbild bezieht, während die Druckvorrichtung ein Bild druckt.

3. Druckvorrichtung nach Anspruch 1 oder 2, wobei die Bilderzeugungseinheit

einen euklidischen Abstand zwischen einem durch Umwandeln der Farbinformationen erhaltenen Wert eines L*a*b*-Farbraums und einem durch Umwandeln von Farbinformationen, die eine Farbe des vorbestimmten Musters angeben, erhaltenen Wert eines L*a*b*-Farbraums berechnet, und
den Hintergrund druckt und dann das vorbestimmte Muster gemäß einer Beziehung zwischen dem berechneten euklidischen Abstand und einem vorbestimmten Schwellenwert druckt.

4. Druckvorrichtung nach Anspruch 3, wobei falls der berechnete euklidische Abstand kleiner als oder gleich dem vorbestimmten Schwellenwert ist, die Bilderzeugungseinheit den Hintergrund druckt und dann das vorbestimmte Muster druckt.

5. Druckvorrichtung nach Anspruch 3 oder 4, wobei falls der berechnete euklidische Abstand größer als der vorbestimmte Schwellenwert ist, die Bilderzeugungseinheit den Hintergrund nicht druckt und das vorbestimmte Muster druckt.

6. Druckvorrichtung nach einem der Ansprüche 1 bis 5, ferner umfassend:

eine erste Analyseeinheit, die konfiguriert ist, das Scanbild des Bogens unter Verwendung der Farbinformationen und von Farbinformationen des vorbestimmten Musters zu analysieren, wobei

die Bilderzeugungseinheit den Hintergrund druckt und dann das vorbestimmte Muster gemäß einem von der ersten Analyseeinheit durch die Analyse erhaltenen Analyseergebnis druckt.

7. Druckvorrichtung nach Anspruch 6, ferner umfassend:
eine Speichereinheit, die konfiguriert ist, das Analyseergebnis zu speichern.

8. Druckvorrichtung nach Anspruch 7, wobei
die Speichereinheit das Analyseergebnis für einen jeweiligen Bogentyp speichert.

9. Druckvorrichtung nach einem der Ansprüche 1 bis 8, wobei
falls die zweite Analyseeinheit das vorbestimmte Muster in dem Scanbild des vorbestimmten Musters nicht erkennen kann und der Hintergrund nicht gedruckt wird, die Bilderzeugungseinheit den Hintergrund und dann das vorbestimmte Muster auf eine nachfolgende Seite des Bogens druckt.

10. Druckvorrichtung nach einem der Ansprüche 1 bis 8, wobei
falls die zweite Analyseeinheit das vorbestimmte Muster in dem Scanbild des vorbestimmten Musters erkennen kann und es keinen Fehler in einer vorherigen Analyse durch die zweite Analyseeinheit gab, die Bilderzeugungseinheit den Hintergrund, der relativ verkleinert ist, und dann das vorbestimmte Muster auf eine nachfolgende Seite des Bogens druckt.

11. Druckvorrichtung nach einem der Ansprüche 1 bis 8, wobei
falls die zweite Analyseeinheit das vorbestimmte Muster in dem Scanbild des vorbestimmten Musters erkennen kann und es keinen Fehler in einer vorherigen Analyse durch die zweite Analyseeinheit gab, die Bilderzeugungseinheit den Hintergrund, der eine relativ reduzierte Abdeckungsrate aufweist, und dann das vorbestimmte Muster auf eine nachfolgende Seite des Bogens druckt.

12. Druckvorrichtung nach einem der Ansprüche 1 bis 11, ferner umfassend:
eine Steuereinheit, die konfiguriert ist, das Drucken durch die Druckvorrichtung anzupassen, wobei
die Bezugseinheit ein Scanbild des vorbestimmten Musters bezieht, das durch Scannen des von der Bilderzeugungseinheit auf den Bogen gedruckten vorbestimmten Musters erhalten wird, und
die Steuereinheit das Drucken durch die Druckvorrichtung gemäß einem Analyseergebnis anpasst, das durch Analysieren des durch die Bezugseinheit bezogenen Scanbilds des vorbestimmten Musters erhalten wird.

13. Druckvorrichtung nach Anspruch 12, wobei
die Bilderzeugungseinheit das vorbestimmte Muster zum Detektieren einer Farbfehlregistrierung auf den Bogen druckt, und
die Steuereinheit eine Anpassung zum Beseitigen der Farbfehlregistrierung gemäß einem Analyseergebnis durchführt, das durch Analysieren des durch die Bezugseinheit bezogenen Scanbilds des vorbestimmten Musters erhalten wird.

14. Druckvorrichtung nach Anspruch 12, wobei
die Bilderzeugungseinheit das vorbestimmte Muster zum Detektieren einer Farbungleichmäßigkeit auf den Bogen druckt, und
die Steuereinheit eine Anpassung zum Beseitigen der Farbungleichmäßigkeit gemäß einem Analyseergebnis durchführt, das durch Analysieren des durch die Bezugseinheit bezogenen Scanbilds des vorbestimmten Musters erhalten wird.

15. Druckvorrichtung nach Anspruch 12, wobei
die Bilderzeugungseinheit einen Druckkopf umfasst, der einer Farbe des vorbestimmten Musters entspricht,
die Bilderzeugungseinheit das vorbestimmte Muster zum Detektieren eines Ausstoßdefekts des Druckkopfs auf den Bogen druckt, und
die Steuereinheit eine Anpassung zum Beseitigen des Ausstoßdefekts gemäß einem Analyseergebnis durchführt, das durch Analysieren des durch die Bezugseinheit bezogenen Scanbilds des vorbestimmten Musters erhalten wird.

16. Druckvorrichtung nach Anspruch 12, wobei
die Bilderzeugungseinheit das vorbestimmte Muster zum Detektieren eines Farbtons auf den Bogen druckt, und
die Steuereinheit den Farbton gemäß einem Analyseergebnis anpasst, das durch Analysieren des durch die Bezugseinheit bezogenen Scanbilds des vorbestimmten Musters erhalten wird.

17. Druckvorrichtung nach einem der Ansprüche 1 bis 16, wobei
die Bilderzeugungseinheit die Hintergründe in mehreren Varianten auf den Bogen druckt, die sich hinsichtlich Größe und/oder Abdeckungsrate unterscheiden, und das vorbestimmte Muster jeweils auf die Hintergründe in den mehreren Varianten und den Bogen als Muster in mehreren Varianten druckt,

die zweite Analyseeinheit die Muster in den mehreren Varianten analysiert, um ein Muster in einer Variante auszuwählen, die beim Drucken verwendet werden soll, und

die Bilderzeugungseinheit den Hintergrund entsprechend dem Muster in der so ausgewählten Variante druckt und dann das vorbestimmte Muster druckt.

18. Druckvorrichtung nach einem der Ansprüche 1 bis 17, wobei

die Bilderzeugungseinheit den Hintergrund auf einen Randbereich in dem Bogen druckt und dann das vorbestimmte Muster druckt.

19. Druckvorrichtung nach einem der Ansprüche 1 bis 18, wobei

die Bilderzeugungseinheit umfasst:

eine erste Bilderzeugungseinheit, die konfiguriert ist, den Hintergrund auf den Bogen zu drucken; und
eine zweite Bilderzeugungseinheit, die stromabwärts der ersten Bilderzeugungseinheit vorgesehen ist und konfiguriert ist, das vorbestimmte Muster auf den Hintergrund zu drucken, und

eine Farbdifferenz zwischen Farbinformationen, die eine Farbe des Hintergrunds angeben, und Farbinformationen, die eine Farbe des vorbestimmten Musters angeben, größer als ein vorbestimmter Schwellenwert ist.

20. Druckverfahren, umfassend:

einen Bezugsschritt des Beziehens von Farbinformationen aus einem Scanbild des Bogens, die eine Farbe eines beim Drucken zu verwendenden Bogens angeben; und
einen Bilderzeugungsschritt des Druckens, basierend auf den Farbinformationen, eines Hintergrunds für ein auf dem Bogen zu erzeugendes vorbestimmtes Muster und des anschließenden Druckens des vorbestimmten Musters auf den Bogen;
**gekennzeichnet durch**:

einen Analyseschritt des Analysierens eines Scanbilds des vorbestimmten Musters, wobei
das Scanbild des vorbestimmten Musters bezogen wird, das durch Scannen des im Bilderzeugungsschritt gedruckten vorbestimmten Musters erhalten wird, und

falls das vorbestimmte Muster in dem Scanbild des vorbestimmten Musters im Analyseschritt nicht erkannt werden kann und der Hintergrund gedruckt wird, im Bilderzeugungsschritt der Hintergrund, der relativ vergrößert ist oder eine relativ erhöhte Abdeckungsrate aufweist, und dann das vorbestimmte Muster auf eine nachfolgende Seite des Bogens gedruckt wird.

21. Programm, umfassend Anweisungen, die, wenn das Programm von einem Computer ausgeführt wird, den Computer veranlassen, als die Druckvorrichtung nach einem der Ansprüche 1 bis 19 zu arbeiten.

22. Nichtflüchtiges computerlesbares Speichermedium, das ein Programm nach Anspruch 21 speichert.

**Revendications**

1. Appareil d'impression (100) comprenant :

une unité d'obtention (107) configurée pour obtenir des informations de couleur indiquant une couleur d'une feuille (111) devant être utilisée lors d'une impression à partir d'une image de balayage de la feuille (111) ; et une unité de formation d'image (103, 102) configurée pour imprimer, sur la base des informations de couleur, un arrière-plan pour un motif prédéterminé devant être formé sur la feuille (111) et imprimer le motif prédéterminé sur la feuille (111) ;
**caractérisé par** :

une seconde unité d'analyse configurée pour analyser une image de balayage du motif prédéterminé, dans lequel
l'unité d'obtention obtient, en tant qu'image de balayage de la feuille, l'image de balayage du motif prédéterminé obtenue en balayant le motif prédéterminé imprimé par l'unité de formation d'image, et
dans un cas où la seconde unité d'analyse ne peut pas reconnaître le motif prédéterminé dans l'image de balayage du motif prédéterminé et l'arrière-plan est imprimé, l'unité de formation d'image imprime l'arrière-plan qui est relativement étendu ou a un taux de couverture relativement accru et imprime ensuite le motif prédéterminé sur une page suivante de la feuille.

2. Appareil d'impression selon la revendication 1, dans lequel

l'unité d'obtention obtient l'image de balayage tandis que l'appareil d'impression imprime une image.

3. Appareil d'impression selon la revendication 1 ou 2, dans lequel

    l'unité de formation d'image
calcule une distance euclidienne entre une valeur d'un espace colorimétrique L*a*b* obtenue en convertissant les informations de couleur et une valeur d'un espace colorimétrique L*a*b* obtenue en convertissant des informations de couleur indiquant une couleur du motif prédéterminé, et
imprime l'arrière-plan et imprime ensuite le motif prédéterminé conformément à une relation entre la distance euclidienne calculée et un seuil prédéterminé.

4. Appareil d'impression selon la revendication 3, dans lequel
dans un cas où la distance euclidienne calculée est inférieure ou égale au seuil prédéterminé, l'unité de formation d'image imprime l'arrière-plan et imprime ensuite le motif prédéterminé.

5. Appareil d'impression selon la revendication 3 ou 4, dans lequel
dans un cas où la distance euclidienne calculée est plus grande que le seuil prédéterminé, l'unité de formation d'image n'imprime pas l'arrière-plan et imprime le motif prédéterminé.

6. Appareil d'impression selon l'une quelconque des revendications 1 à 5, comprenant en outre :

    une première unité d'analyse configurée pour analyser l'image de balayage de la feuille en utilisant les informations de couleur et des informations de couleur du motif prédéterminé, dans lequel
l'unité de formation d'image imprime l'arrière-plan et imprime ensuite le motif prédéterminé conformément à un résultat d'analyse obtenu par la première unité d'analyse par l'intermédiaire de l'analyse.

7. Appareil d'impression selon la revendication 6, comprenant en outre :
une unité de stockage configurée pour stocker le résultat d'analyse.

8. Appareil d'impression selon la revendication 7, dans lequel
l'unité de stockage stocke le résultat d'analyse pour chaque type de la feuille.

9. Appareil d'impression selon l'une quelconque des revendications 1 à 8, dans lequel
dans un cas où la seconde unité d'analyse ne peut pas reconnaître le motif prédéterminé dans l'image de balayage du motif prédéterminé et l'arrière-plan n'est pas imprimé, l'unité de formation d'image imprime l'arrière-plan et imprime ensuite le motif prédéterminé sur une page suivante de la feuille.

10. Appareil d'impression selon l'une quelconque des revendications 1 à 8, dans lequel
dans un cas où la seconde unité d'analyse peut reconnaître le motif prédéterminé dans l'image de balayage du motif prédéterminé et il n'y a pas eu d'échec lors d'une analyse précédente par la seconde unité d'analyse, l'unité de formation d'image imprime l'arrière-plan qui est relativement contracté et imprime ensuite le motif prédéterminé sur une page suivante de la feuille.

11. Appareil d'impression selon l'une quelconque des revendications 1 à 8, dans lequel
dans un cas où la seconde unité d'analyse peut reconnaître le motif prédéterminé dans l'image de balayage du motif prédéterminé et il n'y a pas eu d'échec lors d'une analyse précédente par la seconde unité d'analyse, l'unité de formation d'image imprime l'arrière-plan qui a un taux de couverture relativement réduit et imprime ensuite le motif prédéterminé sur une page suivante de la feuille.

12. Appareil d'impression selon l'une quelconque des revendications 1 à 11, comprenant en outre :

    une unité de commande configurée pour ajuster une impression par l'appareil d'impression, dans lequel
l'unité d'obtention obtient une image de balayage du motif prédéterminé obtenue en balayant le motif prédéterminé imprimé sur la feuille par l'unité de formation d'image, et
l'unité de commande ajuste l'impression par l'appareil d'impression conformément à un résultat d'analyse obtenu en analysant l'image de balayage du motif prédéterminé obtenue par l'unité d'obtention.

13. Appareil d'impression selon la revendication 12, dans lequel

    l'unité de formation d'image imprime le motif prédéterminé pour détecter un mauvais alignement des couleurs sur la feuille, et
l'unité de commande réalise un ajustement pour supprimer le mauvais alignement des couleurs conformément à un résultat d'analyse obtenu en analysant l'image de balayage du motif prédéterminé obtenue par l'unité d'obtention.

**14.** Appareil d'impression selon la revendication 12, dans lequel

l'unité de formation d'image imprime le motif prédéterminé pour détecter une irrégularité de couleur sur la feuille, et
l'unité de commande réalise un ajustement pour supprimer l'irrégularité de couleur conformément à un résultat d'analyse obtenu en analysant l'image de balayage du motif prédéterminé obtenue par l'unité d'obtention.

**15.** Appareil d'impression selon la revendication 12, dans lequel

l'unité de formation d'image comprend une tête d'impression correspondant à une couleur du motif prédéterminé,
l'unité de formation d'image imprime le motif prédéterminé pour détecter un défaut d'éjection de la tête d'impression sur la feuille, et
l'unité de commande réalise un ajustement pour supprimer le défaut d'éjection conformément à un résultat d'analyse obtenu en analysant l'image de balayage du motif prédéterminé obtenue par l'unité d'obtention.

**16.** Appareil d'impression selon la revendication 12, dans lequel

l'unité de formation d'image imprime le motif prédéterminé pour détecter un ton de couleur sur la feuille, et
l'unité de commande ajuste le ton de couleur conformément à un résultat d'analyse obtenu en analysant l'image de balayage du motif prédéterminé obtenue par l'unité d'obtention.

**17.** Appareil d'impression selon l'une quelconque des revendications 1 à 16, dans lequel

l'unité de formation d'image imprime les arrière-plans sous une pluralité de formes qui sont différentes en termes d'au moins un parmi une taille et un taux de couverture sur la feuille et imprime le motif prédéterminé sur chacun des arrière-plans sous la pluralité de formes et la feuille en tant que motifs sous une pluralité de formes,
la seconde unité d'analyse analyse les motifs sous la pluralité de formes pour sélectionner un motif sous une forme devant être utilisée lors de l'impression, et
l'unité de formation d'image imprime l'arrière-plan correspondant au motif sous la forme ainsi sélectionnée et imprime ensuite le motif prédéterminé.

**18.** Appareil d'impression selon l'une quelconque des revendications 1 à 17, dans lequel
l'unité de formation d'image imprime l'arrière-plan sur une région de marge dans la feuille et imprime ensuite le motif prédéterminé.

**19.** Appareil d'impression selon l'une quelconque des revendications 1 à 18, dans lequel
l'unité de formation d'image comprend :

une première unité de formation d'image configurée pour imprimer l'arrière-plan sur la feuille ; et
une seconde unité de formation d'image fournie en aval de la première unité de formation d'image et configurée pour imprimer le motif prédéterminé sur l'arrière-plan, et
une différence de couleur entre des informations de couleur indiquant une couleur de l'arrière-plan et des informations de couleur indiquant une couleur du motif prédéterminé est plus grande qu'un seuil prédéterminé.

**20.** Procédé d'impression comprenant :

une étape d'obtention consistant à obtenir des informations de couleur indiquant une couleur d'une feuille devant être utilisée lors d'une impression à partir d'une image de balayage de la feuille ; et
une étape de formation d'image consistant à imprimer, sur la base des informations de couleur, un arrière-plan pour un motif prédéterminé devant être formé sur la feuille, et imprimer ensuite le motif prédéterminé sur la feuille ;
**caractérisé par** :

une étape d'analyse consistant à analyser une image de balayage du motif prédéterminé, dans lequel
l'image de balayage du motif prédéterminé obtenue en balayant le motif prédéterminé imprimé lors de l'étape de formation d'image est obtenue, et
dans un cas où le motif prédéterminé dans l'image de balayage du motif prédéterminé ne peut pas être reconnu lors de l'étape d'analyse et l'arrière-plan est imprimé, l'arrière-plan qui est relativement étendu ou a un taux de couverture relativement accru est imprimé et le motif prédéterminé est ensuite imprimé lors de l'étape de formation d'image sur une page suivante de la feuille.

**21.** Programme comprenant des instructions qui, lorsque le programme est exécuté par un ordinateur, amènent l'ordinateur à fonctionner comme l'appareil d'impression selon l'une quelconque des revendications 1 à 19.

22. Support de stockage non transitoire lisible par ordinateur stockant un programme selon la revendication 21.

**FIG.1**

EP 4 468 691 B1

FIG.2

**FIG.3**

EP 4 468 691 B1

START

S401
SCAN PAPER

S402
ANALYZE SCAN IMAGE OF PAPER

S403
IS BACKGROUND
REQUIRED?

YES

S404
PRINT BACKGROUND

NO

S405
PRINT PATTERN

S406
SCAN PATTERN

S407
ANALYZE SCAN IMAGE OF PATTERN

S408
REFLECT ANALYSIS RESULT

END

# FIG.4

FIG.5A

FIG.5B

FIG.5C

FIG.5D

CONVEYANCE DIRECTION

EP 4 468 691 B1

START

S601
SCAN PAPER

S602
ANALYZE SCAN IMAGE OF PAPER

S603
STORE ANALYSIS RESULT

S604
START PRINTING

S605
IS BACKGROUND REQUIRED? — YES

S606
PRINT BACKGROUND

NO

S607
PRINT PATTERN

S608
SCAN PATTERN

S609
ANALYZE SCAN IMAGE OF PATTERN

S610
REFLECT ANALYSIS RESULT

END

# FIG.6

EP 4 468 691 B1

FIG.7

32

FIG.8A

107  301  102  300  103  111

801

CONVEYANCE DIRECTION

FIG.8B

107  301  102  300  103  111

803  L11  L12  802  802

CONVEYANCE DIRECTION

FIG.8C

107  301  102  300  103  111

805  L21  L22  804  804

CONVEYANCE DIRECTION

EP 4 468 691 B1

```
                      ┌─────────┐
                      │  START  │
                      └────┬────┘
                           │        ╭S901
              ┌────────────▼───────────────┐
     ┌───────►│ ADD BACKGROUND TO PATTERN  │
     │        └────────────┬───────────────┘
     │                     │        ╭S902
     │        ┌────────────▼───────────────┐
     │        │   PRINT IMAGE AND PATTERN  │
     │        └────────────┬───────────────┘
     │                     │        ╭S903
     │        ┌────────────▼───────────────┐
     │        │        SCAN PATTERN        │
     │        └────────────┬───────────────┘
     │                     │        ╭S904
     │        ┌────────────▼───────────────┐
     │        │   ANALYZE SCAN IMAGE OF    │
     │        │          PATTERN           │
     │        └────────────┬───────────────┘
     │                     │       ╭S905
     │               ◇─────────────◇   NO
     │              ◇  DID ANALYSIS  ◇──────────┐
     │               ◇   SUCCEED?   ◇           │
     │                ◇──────┬─────◇            │
     │                       │ YES   ╭S906      │      ╭S909
     │        ┌──────────────▼────────┐   ┌─────▼──────────────┐
     │        │ REFLECT ANALYSIS RESULT│   │  EXPAND WIDTH OF   │
     │        └──────────────┬────────┘   │    BACKGROUND      │
     │                       │            └─────┬──────────────┘
     │                       │  ╭S907           │
     │               ◇───────────────◇  YES     │
     │              ◇      HAS        ◇──────────┼──────►
     │             ◇ ANALYSIS FAILED ONCE◇       │
     │              ◇    OR MORE?      ◇         │
     │               ◇──────┬────────◇          │
     │                      │ NO   ╭S908         │
     │        ┌─────────────▼─────────┐          │
     │        │   CONTRACT WIDTH OF   │          │
     │        │      BACKGROUND       │          │
     │        └─────────────┬─────────┘          │
     │                      │◄──────────────────┘
     │                      │   ╭S910
     │              ◇───────────────◇
     │  YES        ◇      IS         ◇
     └─────────────◇ THERE SUBSEQUENT◇
                    ◇     PAGE?      ◇
                     ◇──────┬───────◇
                            │ NO
                       ┌────▼────┐
                       │   END   │
                       └─────────┘
```

# FIG.9

START

PRINT IMAGE AND PATTERN — S1001

SCAN PATTERN — S1002

ANALYZE SCAN IMAGE OF PATTERN — S1003

DID ANALYSIS SUCCEED? — S1004
NO →

YES — S1005
REFLECT ANALYSIS RESULT

IS THERE BACKGROUND? — S1006
NO →

YES — S1007
INCREASE COVER RATE OF BACKGROUND

ADD BACKGROUND TO PATTERN — S1008

IS THERE SUBSEQUENT PAGE? — S1009
YES
NO

END

# FIG.10

FIG.11A

FIG.11B

FIG.11C

START

S1201
ADD BACKGROUND TO PATTERN

S1202
PRINT IMAGE AND PATTERN

S1203
SCAN PATTERN

S1204
ANALYZE SCAN IMAGE OF PATTERN

S1205
DID ANALYSIS SUCCEED?  — NO →

S1209
INCREASE COVER RATE OF BACKGROUND

YES
S1206
REFLECT ANALYSIS RESULT

S1207
HAS ANALYSIS FAILED ONCE OR MORE?  — YES →

NO
S1208
REDUCE COVER RATE OF BACKGROUND

S1210
IS THERE SUBSEQUENT PAGE?  ← YES

NO
END

# FIG.12

START

PRINT PATTERNS IN A PLURALITY OF FORMS — S1301

SCAN PATTERNS — S1302

ANALYZE SCAN IMAGES OF PATTERNS — S1303

SELECT OPTIMUM ONE AMONG PATTERNS FOR WHICH ANALYSIS SUCCEEDED — S1304

PRINT IMAGE AND PATTERN — S1305

SCAN PATTERN — S1306

ANALYZE SCAN IMAGE OF PATTERN — S1307

REFLECT ANALYSIS RESULT — S1308

IS THERE SUBSEQUENT PAGE? — S1309

YES

NO

END

FIG.13

FIG.14A

107  102  1401  300  103  111
1402
CONVEYANCE DIRECTION

FIG.14B

107  1404  1403  301  102  300  103  111
1405
CONVEYANCE DIRECTION

FIG.14C

107  301  102  300  103  111
1405  1402  1402
CONVEYANCE DIRECTION

EP 4 468 691 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021133601 A

- JP 2021185397 A